# EUROPEAN PATENT APPLICATION

(11) **EP 4 765 742 A1**
(43) Date of publication of application: **24.06.2026**
(21) Application number: 24907830.4
(22) Date of filing: 22.11.2024
(51) Int. Cl.: H04L 12/28, H04L 9/08, H04L 9/32, H04L 67/306, G16Y 10/80, G16Y 30/10

(54) **ELECTRONIC DEVICE AND CONTROL METHOD THEREOF**

(30) Priority: 19.12.2023 KR 20230185817
(71) Applicant: Samsung Electronics Co., Ltd., Suwon-si, Gyeonggi-do 16677 (KR)
(72) Inventor: JEONG, Jinwoo, Suwon-si Gyeonggi-do 16677 (KR); HAHM, Seongil, Suwon-si Gyeonggi-do 16677 (KR)
(74) Representative: Gulde & Partner
(86) International application number: PCT/KR2024/018663
(87) International publication number: WO 2025/135545

(57) **Abstract**

An electronic apparatus includes: a communication device; at least one memory storing key information; and at least one processor configured to perform a registration procedure of the electronic apparatus by using acquired onboarding information in case of acquiring the onboarding information, wherein the at least one processor is configured to check other electronic apparatuses having the key information based on the key information, and control the communication device to transmit the acquired onboarding information to another electronic apparatus that has yet to be onboarded among the checked other electronic apparatuses.

## Description

### [BACKGROUND OF THE INVENTION]

### [Field of the Invention]

The present disclosure relates to an electronic apparatus and a method for controlling thereof, and more particularly, to an electronic apparatus which may easily onboard a plurality of electronic apparatus by using a key, and a method for controlling thereof.

### [Description of the Related Art]

In accordance with the development of internet of things (IoT) technology, various electronic devices have been registered on the Internet, thus allowing a user to easily control the various electronic devices.

In order to use these IoT devices, a series of onboarding processes may be required to connect the devices to the Internet network and register the devices to a device (e.g., home server or server) that manages the devices.

However, it is inconvenient because the same operations described above need to be performed repeatedly in order to register the plurality of IoT devices instead of one IoT device. Therefore, there is a need to easily onboard the plurality of IoT devices.

### [Disclosure]

### [Technical Solution]

According to an embodiment of the present disclosure, provided is an electronic apparatus including: a communication device; at least one memory storing key information; and at least one processor configured to perform a registration procedure of the electronic apparatus by using onboarding information acquired by the electronic apparatus, check other electronic apparatuses to determine at least one electronic apparatus of the other electronic apparatuses having the key information, and control the communication device to transmit the onboarding information acquired by the electronic apparatus to an electronic apparatus of the at least one electronic apparatus determined to have the key information and that has yet to be onboarded.

The key information may include a random value, and the at least one processor may be configured to generate at least one of a service set identifier (SSID) or a password based on the random value, and establish connection with another electronic apparatus by using at least one of the generated SSID or password.

The communication device may be operable in an access point (AP) mode or a station mode, and the at least one processor may be configured to control the communication device to operate in the AP mode and the station mode alternately.

The at least one processor may be configured to acquire the onboarding information from another electronic apparatus having a communication device operating in the station mode or a user terminal device while the communication device of the electronic apparatus is operating in the AP mode, and transmit the acquired onboarding information to the electronic apparatus of the at least one electronic apparatus determined to have the key information and that has yet to be onboarded, while a communication device of the at least one electronic apparatus determined to have the key information and that has yet to be onboarded is operating in the station mode and the communication device of the electronic apparatus is operating in the AP mode.

The at least one processor may be configured to acquire the onboarding information from another electronic apparatus having the key information and having a communication device operating in the AP mode while the communication device of the electronic apparatus is operating in the station mode, and transmit the acquired onboarding information to the electronic apparatus of the at least one electronic apparatus determined to have the key information and that has yet to be onboarded, while the communication device of the electronic apparatus is operated in the station mode, and a communication device of the electronic apparatus of the at least one electronic apparatus determined to have the key information and that has yet to be onboarded is operating in the AP mode.

The at least one memory may store period information and sequence information, and the at least one processor may be configured to control the communication device to operate in the AP mode at a time point corresponding to the period information and the sequence information, and operate in the station mode at the remaining time points.

The at least one processor may be configured to check whether sharing of the onboarding information is completed based on the sequence information, and control the communication device of the electronic apparatus to operate in the station mode and establish connection to an access point based on the onboarding information when the check of whether sharing of the onboarding information is completed indicates that the sharing of the onboarding information is completed.

The onboarding information may include AP connection information including a service set identifier (SSID) of an access point, security setting information of the access point, and password information corresponding to the security setting information, and the at least one processor may be configured to establish connection with the access point based on the AP connection information.

The onboarding information may further include user account information, and the at least one processor may be configured to perform the registration procedure of the electronic apparatus on an external server by using the user account information after the electronic apparatus establishes connection with the access point.

The key information may include at least one of a key value generated based on an address where the electronic apparatus is installed, shared SSID information, or shared password information.

According to an embodiment of the present disclosure, provided is a method for controlling an electronic apparatus, the method including, by the electronic apparatus: storing key infomraiton in the electronic apparatus, acquiring onboarding information; performing a registration procedure of the electronic apparatus by using the acquired onboarding information, checking other electronic apparatuses to determine at least one electronic apparatus of the other electronic apparatuses having the key information, and transmitting the acquired onboarding information to an electronic apparatus of the at least one electronic apparatus determined to have the key information and that has yet to be onboarded.

The method, in which the key information includes a random value, may further include, by the electronic apparatus: generating at least one of a service set identifier (SSID) or a password based on the random value, and establishing connection with another electronic apparatus by using at least one of the generated SSID or password.

The method may further include alternately changing a communication mode of the electronic apparatus to an access point (AP) mode and a station mode.

In the acquiring of the onboarding information, the onboarding information may be acquired from another electronic apparatus while a communication mode of the another electronic apparatus is the station mode or a user terminal device and the communication mode of the electronic apparatus is the AP mode, and in the transmitting of the acquired onboarding information, the onboarding information may be transmitted to the electronic apparatus determined to have the key information and that has yet to be onboarded, while the communication mode of the electronic apparatus determined to have the key information and that has yet to be onboarded is the station mode and the communication mode of the electronic apparatus is the AP mode.

In the acquiring of the onboarding information, the onboarding information may be acquired from another electronic apparatus while the communication mode of the another electronic apparatus is the AP mode and the communication mode of the electronic apparatus is the station mode, and in the transmitting of the acquired onboarding information, the acquired onboarding information may be transmitted to the electronic apparatus of the at least one electronic apparatus determined to have the key information and that has yet to be onboarded while the communication mode of the electronic apparatus is the station mode and the communication mode of the electronic apparatus of the at least one electronic apparatus determined to have the key information and that has yet to be onboarded is the AP mode.

The method may further include pre-storing period information and sequence information, and in the changing, the communication mode of the electronic apparatus may be switched to the AP mode at a time point corresponding to the period information and the sequence information, and switched to the station mode at the remaining time points.

In the performing of the onboarding procedure, whether sharing of the onboarding information is completed may be checked based on the sequence information, and the communication mode of the elctronic apparatus may be switched to the station mode and connection to an access point may be established based on the onboarding information when the check of whether sharing of the onboarding information is completed indicates that the sharing of the onboarding information is completed.

The onboarding information may include AP connection information including a service set identifier (SSID) of an access point, security setting information of the access point, and password information corresponding to the security setting, and in the performing of the onboarding procedure, connection with the access point may be established based on the AP connection information.

The onboarding information may further include user account information, and in the performing of the onboarding procedure, the registration procedure of the electronic apparatus may be performed on an external server by using the user account information after the electronic apparatus establishes connection with the access point.

According to an embodiment of the present disclosure, provided is a non-transitory computer-readable recording medium which stores a program for executing a method for controlling an electronic apparatus, wherein the method includes, by the electronic apparatus: storing key information in the electronic apparatus; acquiring onboarding information; performing a registration procedure of the electronic apparatus by using the acquired onboarding information; checking other electronic apparatuses to determine at least one electronic apparatus of the other electronic apparatuses having the key information, and transmitting the acquired onboarding information to an electronic apparatus of the at least one electronic apparatus determined to have the key information and that has yet to be onboarded.

### [Description of Drawings]

The above or other aspects, features, or benefits of embodiments in the present disclosure will be more apparent by the description provided below with reference to the accompanying drawings, in which:
FIG. 1 is a diagram for explaining an electronic system according to an embodiment of the present disclosure;
FIG. 2 is a diagram showing an operation of providing onboarding information according to an embodiment of the present disclosure;
FIG. 3 is a block diagram showing a configuration of an electronic apparatus according to an embodiment of the present disclosure;
FIG. 4 is a block diagram showing a configuration of the electronic apparatus according to an embodiment of the present disclosure;
FIG. 5 is a block diagram showing a configuration of a user terminal device according to an embodiment of the present disclosure;
FIG. 6 is a diagram for explaining an operation of sharing key information according to an embodiment of the present disclosure;
FIGS. 7 to 9 are views showing examples of a user interface window which may be displayed on the user terminal device;
FIG. 10 is a diagram for explaining an operation of providing the onboarding information according to an embodiment of the present disclosure;
FIG. 11 is a diagram showing an example of the user interface window which may be displayed on the user terminal device;
FIG. 12 is a diagram for explaining a communication mode of each electronic apparatus according to an embodiment of the present disclosure;
FIG. 13 is a diagram showing an example of a method of sharing onboarding information among a plurality of electronic apparatuses according to an embodiment of the present disclosure;
FIG. 14 is a diagram showing an example of the method of sharing onboarding information among the plurality of electronic apparatuses according to an embodiment of the present disclosure;
FIG. 15 is a diagram showing an example of the method of sharing onboarding information among the plurality of electronic apparatus according to an embodiment of the present disclosure;
FIG. 16 is a flowchart for explaining a method of sharing key information according to an embodiment of the present disclosure;
FIG. 17 is a flowchart for explaining a method of providing onboarding information according to an embodiment of the present disclosure;
FIG. 18 is a flowchart for explaining a method of identifying another electronic apparatus according to an embodiment of the present disclosure;
FIG. 19 is a flowchart for explaining a method for controlling an electronic apparatus according to an embodiment of the present disclosure; and,
FIG. 20 is a flowchart for explaining a method of sharing onboarding information according to an embodiment of the present disclosure.

### [Mode for Invention]

It is to be understood that various embodiments of this document and terms used herein are not intended to limit technical features described in the present disclosure to specific embodiments, and include various modifications, equivalents, and substitutions of the corresponding embodiments.

Throughout the accompanying drawings, similar components are denoted by similar reference numerals.

A singular noun corresponding to an item is intended to include one or more of the items, unless a relevant context clearly indicates otherwise.

In the present disclosure, an expression "A or B", "at least one of A and B", "at least one of A or B", "A, B, or C", "at least one of A, B, and C", "at least one of A, B, or C", or the like, may include any one of the items enumerated together or all possible combinations thereof.

Terms such as "first" or "second" may be used simply to distinguish one element and another element from each other, and do not limit the corresponding components in any other respect (e.g., importance or order).

In case that a component (for example, a first component) is mentioned to be "coupled to" or "connected to" another component (for example, a second component) with or without terms "operatively or communicatively", it is to be understood that the component may be coupled to another component directly (e.g., in a wired manner), in a wireless manner, or through a third component).

It should be further understood that terms "include", "have" or the like, used in this document specify the presence of features, numerals, steps, operations, components, parts, or combinations thereof, mentioned in the specification, and do not preclude the presence or addition of one or more other features, numerals, steps, operations, components, parts, or combinations thereof.

In case that a component is referred to as being "connected", "coupled", "supported", or "in contact" with another component, it includes not only a case where the components are directly connected, coupled, supported, or in contact with each other, but also a case where the components are indirectly connected, coupled, supported, or in contact with each other through a third component.

In case that a component is referred to be disposed "on" another component, it includes not only a case where the component is in contact with another component, but also a case where still another component exists between the two components.

A term "and/or" includes a combination of a plurality of related items or any one of the plurality of related items.

An expression "configured (or set) to" used in the present disclosure may be replaced by an expression "suitable for", "having the capacity to", "designed to", "adapted to", "made to", or "capable of" based on a situation. The expression "configured (or set) to" may not necessarily indicate "specifically designed to" in hardware.

Instead, an expression "a device configured to" in any situation may indicate that the device may "perform~" together with another device or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

In the embodiments, a "module" or a "~er/or" may perform at least one function or operation, and be implemented by hardware or software or be implemented by a combination of hardware and software. In addition, a plurality of "modules" or a plurality of "~ers/ors" may be integrated with each other in at least one module and implemented by at least one processor except for a "module" or an "~er/or" that needs to be implemented in specific hardware.

Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Meanwhile, various elements and regions in the drawings are schematically shown. Therefore, the spirit of the present disclosure is not limited by relative sizes or intervals shown in the accompanying drawings.

Hereinafter, the operation principles and embodiments of the present disclosure are described with reference to the accompanying drawings.

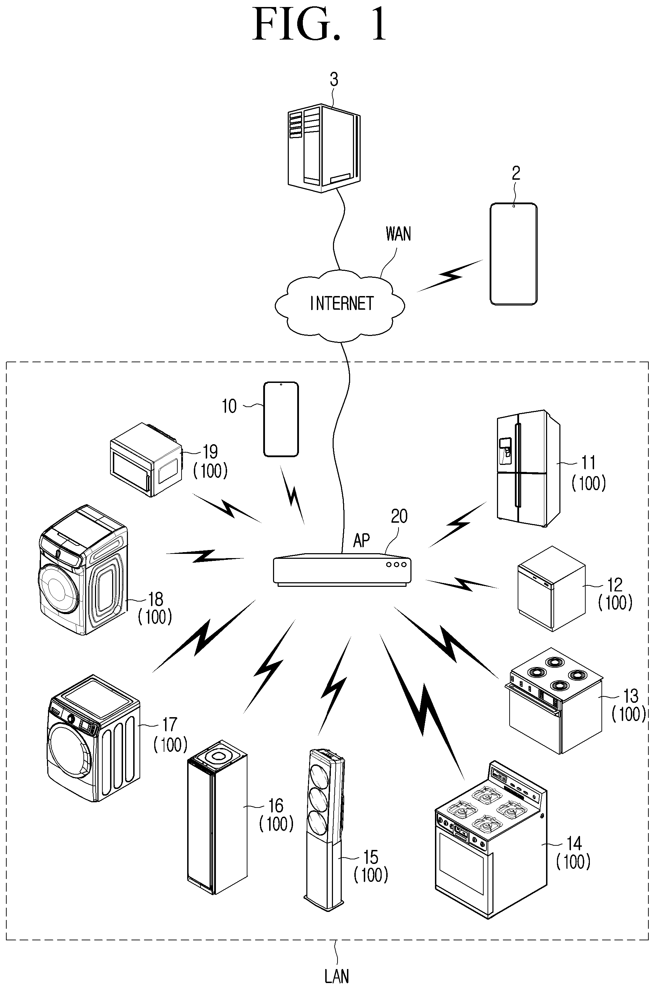

FIG. 1 is a diagram for explaining an electronic system according to an embodiment of the present disclosure.

Referring to FIG. 1, an electronic apparatus 100 may include a communication module capable of communicating with another home appliance device, user devices 2 and 10, or a server 3, a user interface for receiving a user input or output information to a user, at least one processor controlling an operation of the electronic apparatus 100, and at least one memory storing a program for controlling the operation of the electronic apparatus 100.

The electronic apparatus 100 may be at least one of various types of home appliances. For example, as shown in the drawing, the electronic apparatus 100 may include at least one of a refrigerator 11, a dishwasher 12, an electric range 13, an electric oven 14, an air conditioner 15, a clothes care machine 16, a washing machine 17, a dryer 18, or a microwave oven 19, is not limited thereto, and include, for example, various types of home appliances not shown in the drawing, such as a cleaning robot, a vacuum cleaner, and a television. In addition, the home appliances mentioned above are only examples, and the electronic apparatus 100 according to an embodiment may include any device connected to another home appliance device, the user device 2 or 10, or the server 3 to thus perform an operation described below, in addition to the home appliances mentioned above.

The server 3 may include a communication module capable of communicating with another server, the electronic apparatus 100, or the user device 2 or 10, at least one processor capable of processing data received from another server, the electronic apparatus 100, or the user device 2 or 10, and at least one memory capable of storing a program for processing data or processed data.

The server 3 may be implemented as various computing devices such as a workstation, a cloud, a data drive, and a data station. The server 3 may be implemented as one or more servers physically or logically separated from each other based on its function, a detailed configuration of the function, or data, or the like, and transmit and receive data through communication between the respective servers and process the transmitted and received data.

The server 3 may perform the function such as managing a user account, registering the electronic apparatus 100 by linking the electronic apparatus 100 to the user account, or managing or controlling the registered electronic apparatus 100. For example, the user may access to the server 3 through the user device 2 or 10 and generate the user account. As shown in the drawing, the user device may be located within the same network or located and used through an external Internet network.

The user account may be identified by an identity (ID) and a password (or token) set by the user. The server 3 may register the electronic apparatus 100 to the user account based on an established procedure. For example, the server 3 may register, manage, and control the electronic apparatus 100 linking identification information (e.g., serial number or MAC address) of the electronic apparatus 100 to the user account. The user device 2 or 10 may include a communication module capable of communicating with the electronic apparatus 100 or the server 3, a user interface for receiving the user input or outputting information to the user, at least one processor controlling an operation of the user device, and at least one memory storing a program for controlling the operation of the user device.

The server 3 may be referred to as an internet of things (IoT) server or a cloud server in that the server 3 may control a number of electronic apparatus, as described above, or also be referred to as a home server or the like controlling only the electronic apparatus of a specific user rather than the electronic apparatuses of a plurality of users.

The user device 2 or 10 may be carried by the user or disposed in the home, office, or the like of the user. The user device 2 or 10 may include a personal computer, a terminal, a portable telephone, a smartphone, a handheld device, a wearable device, or the like, and is not limited thereto.

The user device 2 or 10 may be referred to as the user terminal device, or also be referred to as a helper, or a helper device in that the user device 2 or 10 assists in a registration procedure of the electronic apparatus in a process described below.

The memory of the user device 2 or 10 may store a program, i.e., application, for controlling the electronic apparatus 100. The application may be sold by being installed on the user device 2 or 10, or installed by being downloaded from an external server.

The user may access to the server 3 and generate the user account by executing the application installed on the user device 2 or 10, and the electronic apparatus 100 may be registered through communication with the server 3 based on the logged-in user account.

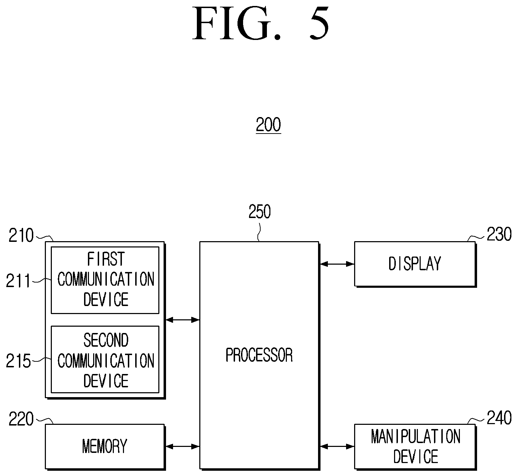

For example, the user may manipulate the electronic apparatus 100 for the electronic apparatus 100 to access to the server 3 according to a procedure guided by the application installed on the user device 2 or 10. In this case, the server 3 may register the identification information (e.g., serial number or MAC address) of the electronic apparatus 100 in the user account. As a result, the electronic apparatus 100 may be registered in the user account. A more detailed operation thereof is described below with reference to FIG. 5.

The user may control the electronic apparatus 100 by using the application installed on the user device 2 or 10. For example, the electronic apparatus 100 registered in the user account may appear in case that the user logs into the user account by using the application installed on the user device 2 or 10, and a control command may be transmitted to the electronic apparatus 100 through the server 3 in case that the user inputs the control command for the electronic apparatus 100.

The network may include both wired and wireless networks. The wired network may include a cable network or a telephone network, and the wireless network may include any network that transmits and receives a signal through a radio wave. The wired network and the wireless network may be connected to each other.

The networks may include a wide area network (WAN) such as the Internet, a local area network (LAN) formed around an access point (AP) (access repeater), or a short-range wireless network without the access point (AP). The short-range wireless network may include Bluetooth (IEEE 802.15.1), Zigbee (IEEE 802.15.4), wireless-fidelity (Wi-Fi) direct, near field communication (NFC), or Z-wave, and is not limited thereto.

An access point 20 may connect the electronic apparatus 100 or the user device 2 or 10 to the wide area network (WAN) to which the server 3 is connected. The electronic apparatus 100 or the user device 2 or 10 may be connected to the server 3 through the wide area network (WAN).

The access point (AP) may communicate with the electronic apparatus 100 or the user device 2 or 10 by using the wireless communication such as Wi-Fi (IEEE 802.11), Bluetooth (IEEE 802.15.1), and Zigbee (IEEE 802.15.4), access to the wide area network (WAN) by using the wired communication, and is not limited thereto.

According to the various embodiments, the electronic apparatus 100 may be directly connected to the user device 2 or 10 or the server 3 without going through the access point (AP).

The electronic apparatus 100 may be connected to the user device 2 or 10 or the server 3 through a long-distance wireless network or the short-range wireless network.

For example, the electronic apparatus 100 may be connected to the user device 2 or 10 through the short-range wireless network (e.g., Wi-Fi Direct).

As another example, the electronic apparatus 100 may be connected to the user device 2 or 10 or the server 3 through the wide area network (WAN) by using the long-distance wireless network (e.g., cellular communication module).

As another example, the electronic apparatus 100 may access to the wide area network (WAN) by using the wired communication, and be connected to the user device 2 or 10 or the server 3 through the wide area network (WAN).

The electronic apparatus 100 may be operated as the access point in case that the electronic apparatus 100 may access to the wide area network (WAN) by using the wired communication. Accordingly, the electronic apparatus 100 may connect another home appliance device to the wide area network (WAN) to which the server 3 is connected. In addition, another home appliance device may connect the electronic apparatus 100 to the wide area network (WAN) to which the server 3 is connected.

The electronic apparatus 100 may transmit information on its operation or state to another home appliance device, the user device 2 or 10, or the server 3 through the network. For example, the electronic apparatus 100 may transmit the information on the operation or state to another home appliance device, the user device 2 or 10, or the server 3 in case of receiving a request from the server 3, in case that a specific event occurs in the electronic apparatus 100, or periodically or in real time.

In case of receiving the information on the operation or state from the electronic apparatus 100, the server 3 may update stored information on the operation or state of the electronic apparatus 100, and transmit updated information on the operation or state of the electronic apparatus 100 to the user device 2 or 10 through the network.

Here, information updating may include various operations that change existing information, such as adding new information to the existing information and replacing the existing information with the new information.

The electronic apparatus 100 may acquire the various information from another home appliance device, the user device 2 or 10, or the server 3, and provide the acquired information to the user. For example, the electronic apparatus 100 may acquire, from the server 3, information (e.g., recipe or washing method) related to the function of the electronic apparatus 100 and various environmental information (e.g., weather, temperature, or humidity), and output the acquired information through the user interface.

The electronic apparatus 100 may be operated according to the control command received from another home appliance device, the user device 2 or 10, or the server 3. For example, the electronic apparatus 100 may acquire the user's prior approval for the electronic apparatus 100 to be operated according to the control command from the server 3 even without the user input. In this case, the electronic apparatus 100 may be operated according to the control command received from the server 3.

Here, the control command received from the server 3 may include the control command input by the user through the user device 2 or 10, a control command based on a predetermined condition, or the like, and is not limited thereto.

The user device 2 or 10 may transmit information on the user to the electronic apparatus 100 or the server 3 through the communication module. For example, the user device 2 or 10 may transmit, to the server 3, information on the user's location, health state, preference, schedule, or the like. The user device 2 or 10 may transmit the information on the user to the server 3 according to the user's prior approval.

The electronic apparatus 100, the user device 2 or 10, or the server 3 may determine the control command by using technology such as an artificial intelligence. For example, the server 3 may receive the information on the operation or state of the electronic apparatus 100 or receive the information on the user from the user device 2 or 10, process the received information by using the technology such as the artificial intelligence, and transmit a processing result or the control command to the electronic apparatus 100 or the user device 2 or 10 based on the processing result.

Meanwhile, hereinabove, the plurality of electronic apparatuses 100 is shown to be connected to the access point. However, if the user moves to a new place, the plurality of electronic apparatuses 100 may not be connected to the access point. In addition, if the corresponding electronic apparatuses are new apparatuses, these electronic apparatuses may not be registered on the above-mentioned server, thus requiring an onboarding procedure.

However, an existing onboarding procedure has to be performed individually for each electronic apparatus. Accordingly, in order to onboard the plurality of electronic apparatuses 100, as shown in the drawing, the existing onboarding procedure requires an operation of providing information necessary for the onboarding to each electronic apparatus 100 corresponding to the number of new electronic apparatuses the user wishes to install.

For example, it is necessary to press a predetermined key for each electronic apparatus 100 to make its onboarding possible, and perform an operation of inputting (or providing) information for connecting to the access point and account information for using the server, by the electronic apparatus 100 or a user terminal device 10.

If this process needs to be repeated, the user may be bound to feel fatigued from the above-mentioned repetitive operations.

Therefore, in order to solve the above-mentioned inconvenience, the present disclosure uses technology to autonomously share onboarding information between the electronic apparatus that requires the onboarding.

In detail, if the electronic apparatuses 11 to 19 shown in the drawing have yet to be onboarded, and in this state, the user inputs (or transmits) the onboarding information for only one electronic apparatus (for example, 11), the remaining devices may also share the onboarding information and autonomously perform onboarding operations on their own.

However, in a space such as an apartment, a distance between respective households may be close. Therefore, if the devices for which the onboarding has yet to be performed are collectively registered, home appliance devices of another household may also be onboarded.

In addition, the onboarding of the electronic apparatus is not performed only because power is supplied thereto. Each electronic apparatus may be available for the onboarding procedure only in case of following a certain procedure (for example, pressing a specific button for a preset time) to perform the onboarding of the corresponding electronic apparatus.

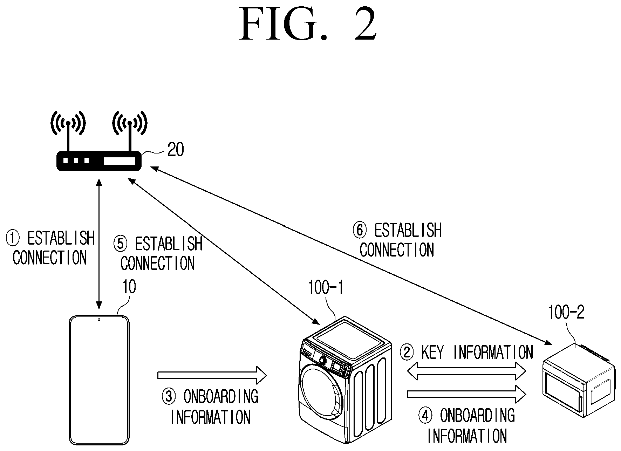

Therefore, the present disclosure describes a method to easily onboard the plurality of electronic apparatuses in consideration of the situations described above. Hereinafter, overall basic onboarding operations are described with reference to FIG. 2.

FIG. 2 is a diagram showing an operation of providing the onboarding information according to an embodiment of the present disclosure.

Referring to FIG. 2, the electronic system may include the access point 20, the user terminal device 10, a first electronic apparatus 100-1, and a second electronic apparatus 100-2.

Hereinafter, for easy description, assume that the first electronic apparatus 100-1 and the second electronic apparatus 100-2 already enter a state for performing the onboarding, and the electronic apparatuses 100-1 and 100-2 respectively stores key information.

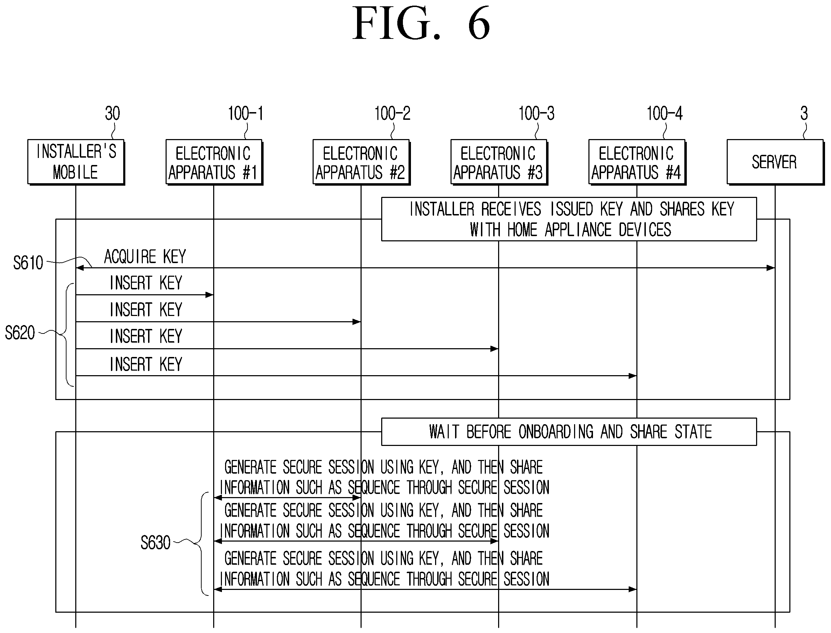

For example, the two operations described above may be performed by an installer who installs the electronic device at home. That is, the operation in FIG. 2 describes an operation performed after the installation operation of the installer, described above. The above-mentioned operations of the installer are described below with reference to FIG. 6.

The access point 20 may enable each electronic apparatus to connect to the external network (or Internet network) or relay connection between other devices in the internal network.

"The access point" may include a device that enables devices to be connected to each other based on a relevant standard using Wi-Fi in a computer network. According to the embodiments of the present disclosure, the AP may include an AP implemented in hardware and an AP implemented in software.

For example, the AP may relay data between a wireless device and a wired device through the network. However, the AP is not limited thereto, and may relay data between the wired devices or relay data between the wireless devices. Meanwhile, AP may be referred to as a relay device, a wireless router, or the like.

The user terminal device 10 may be a device that has a history of being connected to the access point 20 that is currently being used, or may be a device that is connected to the access point (①). If the onboarding of the two electronic apparatuses 100-1 and 100-2 are to be performed using the user terminal device 10, the user terminal device 10 may establish its connection with either device.

The connection may be established with either device of the two electronic apparatuses, which is operated in an AP mode or whose specific key is pressed by the user. The illustrated example assumes that the connection of the user terminal device 10 with the first electronic apparatus 100-1 is established.

In case that the connection is established between the user terminal device 10 and the first electronic apparatus 100-1, the user terminal device 10 may transmit the information necessary for the onboarding (hereinafter, the onboarding information) to the first electronic apparatus 100-1 (③).

Here, "the onboarding information" may include at least one of AP connection information or user account information. Here, the AP connection information may be information necessary for connection with the access point, and include a service set identifier (SSID) of the access point, security setting information of the access point, and password information corresponding to the security setting. In implementation, the above-described AP connection information may include the above-described information on one access point, and include the above-described information on the plurality of access points.

Here, the "security setting information" may be a security method used by the access point, and may be, for example, wired equivalent privacy (WEP), Wi-Fi protected access (WPA), Wi-Fi protected access - pre-shared key (WPA-PSK), extensible authentication protocol (EAP), 802.1x, or the like. In addition, a form (format) of the password required for each security setting may be different, and the above-described password information may have a format suitable for the corresponding security setting.

The AP connection information may also be referred to as access point information, Wi-Fi connection information, Internet connection information, or the like. Meanwhile, in the present disclosure, the AP connection information may use two types of information: the former is information necessary for connecting to the access point as described above, and the latter is information for wireless establishment between the respective electronic apparatuses. To distinguish the two information from each other, the latter is referred hereinafter to only as "connection information".

In addition, "the user account information" may be the user ID and the password for accessing to the server, or may be token information for accessing to the server. Here, the "token information" is information generated through a token-based authentication method, and may be specific data (or key) generated by combining letters, numbers, symbols, or the like. The user account information may be referred to as login information, IoT account information, manufacturer account information, the token information, or the like.

In this way, the first electronic apparatus 100-1, which acquires the onboarding information may provide the onboarding information to the second electronic apparatus 100-2 (④). Here, the first electronic apparatus 100-1 may check the second electronic apparatus 100-2 through comparison of the key information (②). That is, if the first electronic apparatus 100-1 and the second electronic apparatus 100-2 have the same key, the first electronic apparatus 100-1 may identify that the second electronic apparatus 100-2 is a device of the same owner (or same location) and share the onboarding information described above with the second electronic apparatus 100-2.

In this way, if the two devices share the onboarding information with each other, each electronic apparatus may individually perform the onboarding procedure by using the acquired onboarding information. In detail, each electronic apparatus may establish its connection with the access point based on the AP connection information in the onboarding information (⑤) and ⑥).

Here, if the plurality of access point information is included in the AP connection information, each of the electronic apparatuses 100-1 and 100-2 may determine the access point to use based on a signal intensity of each access point and establish its connection with the determined access point.

In addition, each of the electronic apparatuses 100-1 and 100-2 may perform the registration procedure on the server based on the account information in the onboarding information. If the user has no account on the server and the received onboarding information includes no account information, each of the electronic apparatuses 100-1 and 100-2 may omit the registration procedure on the server described above.

Meanwhile, although the onboarding procedure for two electronic apparatuses is shown hereinabove, in implementation, the above-described operation may be applied to three or more electronic apparatuses.

As described above, according to the present disclosure, the user may perform the onboarding procedure for the plurality of electronic apparatuses simply by providing the onboarding information for one electronic apparatus.

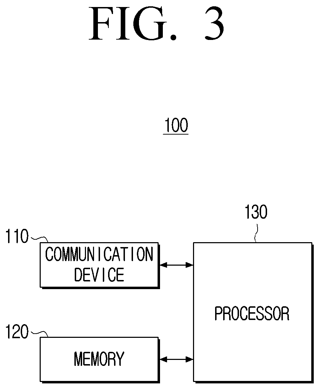

FIG. 3 is a block diagram showing a configuration of the electronic apparatus according to an embodiment of the present disclosure.

Referring to FIG. 3, the electronic apparatus 100 may include a communication device 110, a memory 120, and a processor 130. The electronic apparatus 100 of FIG. 3 may be operated as the first electronic apparatus shown in FIG. 2, and also be operated as the second electronic apparatus shown in FIG. 3.

The communication device 110 may be a component that performs communication with an external device. The communication device 110 may include a Wi-Fi module. Here, the communication module may be implemented in the form of at least one hardware chip.

Meanwhile, in implementation, the communication device 110 may not only include a wired communication module such as the LAN but also have a wireless communication module capable of performing two-way communication with another electronic apparatus, for example, Bluetooth module, Zigbee, 3rd generation (3G), 3rd generation partnership project (3GPP), long term evolution (LTE), LTE advanced (LTE-A), 4th generation (4G), 5th generation (5G), in addition to the Wi-Fi module.

The communication device 110 may be operated in two communication modes. Here, the communication mode may include the AP mode and a station mode.

Here, the "station mode" refers to an operation of connecting to the access point, and the communication device 110 may be connected to the access point 20 shown above, or may be connected to another electronic apparatus operated in the AP mode.

The "AP mode" indicates that a wireless LAN client implements a function of a wireless access point (AP) in software and is operated like the wireless AP, and in case of being operated in the AP mode, the communication device 110 may be directly connected to another electronic apparatus. The AP mode may be referred to as a soft AP mode, a tethering mode, a hotspot mode, a virtual router mode, or the like.

The communication device 110 may perform an operation of alternately changing both the AP mode and the station mode described above to share the onboarding information described below.

The communication device 110 may establish wireless connection with the access point. In addition, the communication device 110 may communicate with another electronic apparatus. For example, in case of being operated in the AP mode, the communication device 110 may establish its connection with another electronic apparatus that requests the connection. On the other hand, in case of being operated in the station mode, the communication device 110 may establish the wireless connection by requesting its connection to the electronic apparatus operated in the AP mode.

In case that this wireless connection is established, the communication device 110 may receive the onboarding information from another electronic apparatus, or provide the acquired onboarding information to another electronic apparatus. For example, if the electronic apparatus 100 is operated as the first electronic apparatus 100-1 of FIG. 2, the communication device 110 may receive the onboarding information from the user terminal device, and provide the onboarding information to the second electronic apparatus 100-2.

The memory 120 may be implemented as an internal memory such as a read-only memory (ROM, e.g., electrically erasable programmable read-only memory (EEPROM)) or a random access memory (RAM), included in the processor 130, or as a memory separate from the processor 130.

In this case, the memory 120 may be implemented in the form of a memory embedded in the electronic apparatus 100 or in the form of a memory detachable from the electronic apparatus 100, based on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100.

The memory 120 may store information on the connected access point or information on the access point that has the connection history. Here, the information on the access point may include the SSID, the security method, the password information, or the like, as described above. The information on the access point may be included in the acquired onboarding information.

The memory 120 may store the received onboarding information. The onboarding information may be received through the user terminal device or from another electronic apparatus.

The memory 120 may include a series of instructions necessary for operating the electronic apparatus. Here, one of the instructions may be an instruction (or application) for an operation in the present disclosure (that is, sharing of the onboarding information), or an instruction for the onboarding operation (e.g., Wi-Fi connection or server registration), an instruction for performing an IoT function, or the like.

Meanwhile, the memory embedded in the electronic apparatus 100 may be implemented as at least one of a volatile memory (e.g., dynamic RAM (DRAM), static RAM (SRAM) or synchronous dynamic RAM (SDRAM)) or a non-volatile memory (e.g., one time programmable ROM (OTPROM), programmable ROM (PROM), erasable and programmable ROM (EPROM), electrically erasable and programmable ROM (EEPROM), a mask ROM, a flash ROM, a flash memory (e.g., NAND flash or NOR flash), a hard drive, or a solid state drive (SSD)); and the memory detachable from the electronic apparatus 100 may be implemented as a memory card (e.g., compact flash (CF), secure digital (SD), micro secure digital (Micro-SD), mini secure digital (mini-SD), extreme digital (xD), or multimedia card (MMC)), an external memory which may be connected to a universal serial bus (USB) port (e.g., USB memory), or the like.

The processor 130 may perform overall control operations of the electronic apparatus 100. In detail, the processor 130 may control overall operations of the electronic apparatus 100.

The processor 130 may be implemented as a digital signal processor (DSP) processing a digital signal, a microprocessor, or a time controller (TCON). However, the processor 130 is not limited thereto, may include at least one of a central processing unit (CPU), a micro controller unit (MCU), a micro processing unit (MPU), a controller, an application processor (AP), a graphics-processing unit (GPU), a communication processor (CP) or an advanced RISC machine (ARM) processor, or may be defined by these terms.

In addition, the processor 130 may be implemented in a system-on-chip (SoC), in which a processing algorithm is embedded, or a large scale integration (LSI), or may be implemented in the form of a field programmable gate array (FPGA). In addition, the processor 130 may perform various functions by executing computer executable instructions stored in the memory.

Meanwhile, FIG. 2 shows that the electronic apparatus 100 includes only one processor. However, in implementation, the electronic apparatus 100 may include the plurality of processors (e.g., CPU + GPU, CPU + DSP).

The processor 130 may perform a predetermined basic operation of the electronic apparatus before acquiring the onboarding information.

The processor 130 may perform the procedure for acquiring the onboarding information in case of receiving a predetermined event (e.g., command for performing the onboarding procedure). The predetermined event may be an event where any button of a manipulation device 240 described below is pressed for a predetermined time or more.

For example, the onboarding procedure in the present disclosure may be performed in two operations. The first operation is an operation of searching for the acquired key information and another device using the same, and the second operation is an operation of sharing the onboarding information.

First, in case of receiving the predetermined event as described above, the processor 130 may receive the key information through the communication device 110. The processor 130 may store the received key information in the memory 120.

Here, "the key information" may be a unique value provided by the installer. The key information may be a unique value for a specific address, a random value, or address information.

In addition, the processor 130 may receive the above-described key information, period information, sequence information, information on the number of all the electronic apparatuses on which the onboarding procedure is to be performed, information on another electronic apparatus, or the like. Here, the number information and the information on another electronic apparatus may be identified during a subsequent search process.

Here, "period information" is time information used to determine a time for operating each electronic apparatus in the AP mode. For example, the period information may be the time information for a process of operating all the electronic apparatuses in the AP mode once, or may be time information for each electronic apparatus to maintain the AP mode.

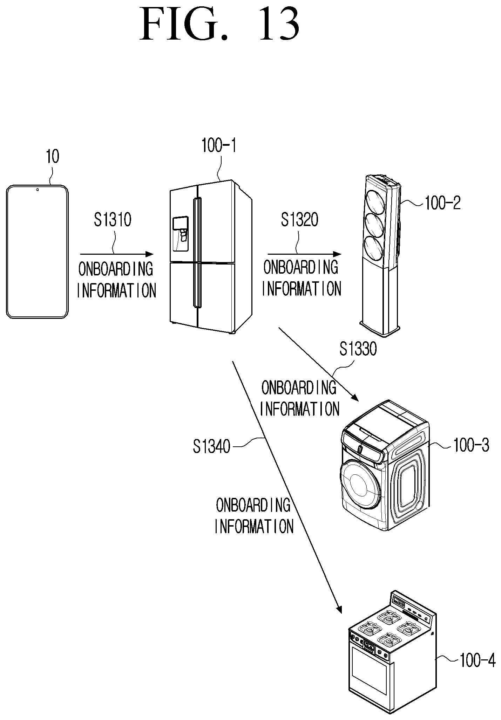

In addition, the "sequence information" is information on the order to be operated by a soft AP, and a different number may be assigned to each electronic apparatus. Meanwhile, in implementation, the soft AP may be operated by fixing only one apparatus among the plurality of electronic apparatuses. Alternatively, the plurality of electronic apparatuses may transmit the onboarding information in a 1:1 manner based on their sequences by using the above-described sequence information. Various sharing methods are described below with reference to FIGS. 13 to 15.

As described above, in case of acquiring the period information and the sequence information, the processor 130 may control the communication device 110 to be operated in the AP mode or the station mode based on the period information and the sequence information.

Accordingly, the plurality of electronic apparatuses may be operated in the AP mode at a time point corresponding to its sequence and operated in the station mode at the remaining time points. In this way, in case that the communication device is operated in the AP mode, other electronic apparatuses request their connections to the current electronic apparatus 100. Through this process, the current electronic apparatus 100 may check the key information stored in another electronic apparatus 100 to identify the electronic apparatus that is required to share the onboarding information. That is, the electronic apparatus 100 may check the number of electronic apparatuses that require the sharing.

The communication device 110 may receive the onboarding information from the user terminal device 10. For example, the electronic apparatus connected to the user terminal device 10 may be the electronic apparatus operated in the AP mode at the corresponding time point. Alternatively, the electronic apparatus 100 may be an electronic apparatus that the user directly controls to operate the electronic apparatus in the AP mode by pressing a predetermined button on the electronic apparatus.

In case of receiving the onboarding information in this way, the processor 130 may control the communication device 110 to provide the received onboarding information to another electronic apparatus. For example, if the communication device 110 is operated in the AP mode, other electronic apparatuses may request their connections to the current electronic apparatus, thus establishing the connection. In this state, the processor 130 may then control the communication device 110 to immediately provide the onboarding information to another electronic apparatus through the established wireless connection.

Meanwhile, if the communication device 110 is operated in the station mode, the processor 130 may allow the wireless connection of the communication device 110 to another electronic apparatus operated in the AP mode, and control the communication device 110 to provide the acquired onboarding information to another electronic apparatus while being operated in the AP mode. In this case, another electronic apparatus currently operated in the AP mode may provide the acquired onboarding information to the remaining electronic apparatuses.

In case of acquiring the onboarding information in this way, the processor 130 may perform the onboarding procedure based on the onboarding information. In detail, if the communication device 110 is operated in the AP mode, the processor 130 may switch the communication device 110 to be operated in the station mode, and establish the connection of the communication device 110 with the access point by using the AP connection information in the onboarding information.

Here, if the plurality of access point information is included in the AP connection information, the processor 130 may check the signal intensities of the plurality of access points by using the information on the plurality of access points, and establish the connection with one of the plurality of access points based on the checked signal intensity. Even in this case, the processor 130 may also store the information on the remaining access points in the memory.

In addition, the user account information may be included in the onboarding information, and the processor 130 may perform the registration procedure on the server based on the account information.

Meanwhile, the onboarding procedure described above is described hereinafter as being performed after the onboarding information is shared to all the electronic apparatuses. However, in implementation, if acquiring the onboarding information, the electronic apparatus may immediately perform the onboarding procedure, or may be operated differently based on the communication mode.

That is, while being operated in the AP mode, the electronic apparatus 100 may continuously perform the procedure that provides the onboarding procedure to another electronic apparatus, and the electronic apparatus 100 may perform the onboarding procedure described above at the time point where another electronic apparatus is required to be operated in the AP mode. Meanwhile, if acquiring the onboarding information described above while being operated in the station mode, the electronic apparatus 100 may immediately perform the onboarding procedure based on the acquired onboarding information.

In this respect, the onboarding procedure in the present disclosure may broadly be an operation that only establishes the Wi-Fi connection, and narrowly be an operation that performs the Wi-Fi connection and the registration procedure on the server. Alternatively, in implementation, only the registration procedure on the server may be referred to as the onboarding procedure.

The processor 130 may perform an operation corresponding to the request in case of receiving the information or the control command from the user terminal device or the server after the onboarding procedure described above.

The received information described above may be the state information of the electronic apparatus 100, and the control command may be a control command related to a specific function of the electronic apparatus 100. For example, if the electronic apparatus is the refrigerator, the control command may be a command for changing a set temperature value of a refrigerator compartment in the refrigerator, and if the electronic apparatus is the cleaning robot, the control command may be a cleaning command, or the like.

As described above, the electronic apparatus 100 according to this embodiment may provide the onboarding information to another electronic apparatus, and thus easily and quickly perform the onboarding procedure for the plurality of electronic apparatuses.

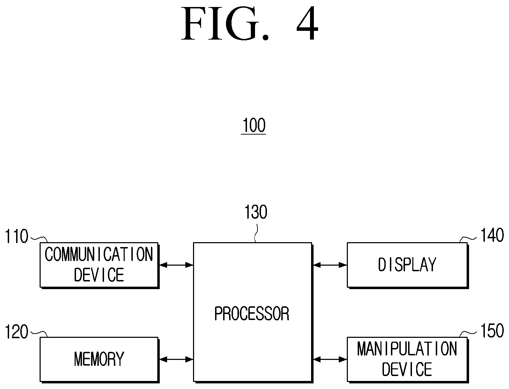

Meanwhile, hereinabove, the description shows and describes only the brief configuration of the electronic apparatus 100. However, in implementation, various configurations may be further provided. This case is described below with reference to FIG. 4.

FIG. 4 is a block diagram showing a configuration of the electronic apparatus according to an embodiment of the present disclosure.

Referring to FIG. 4, the electronic apparatus 100 may include the communication device 110, the memory 120, the processor 130, a display 140, and the manipulation device 150.

The communication device 110, the memory 120, and the processor 130 are described above with reference to FIG. 3, and hereinafter, the description thus describes only parts that are different from those described above.

The display 140 may display the user interface window for selection of the function supported by the electronic apparatus 100. In detail, the display 140 may display the user interface window for selection of various functions provided by the electronic apparatus 100. The display 140 may be a monitor such as a liquid crystal display (LCD) or organic light emitting diodes (OLED), and may be implemented as a touch screen which may simultaneously perform some functions of the manipulation device 240 described below.

The display 140 may display notification information indicating that the onboarding procedure is necessary if the onboarding procedure has yet to be performed. Here, the notification information may include description information for performing the onboarding procedure.

The display 140 may display a performance process while the onboarding procedure is performed. For example, in case of receiving the command for performing the onboarding procedure through the manipulation device 240 described below, the display 140 may display a message or notification indicating that the onboarding procedure is being performed. In this case, the above-mentioned notification may be a display of information on the monitor or a change in a display color of the LED that may display a plurality of colors.

The manipulation device 150 may receive, from the user, selection of a function of the electronic apparatus 100 and a control command for the corresponding function. The manipulation device 240 may be a keyboard, a mouse, a touch pad, or the like, and may include a microphone for receiving a user voice.

The manipulation device 150 may include a button formed on one side of a surface of the electronic apparatus. The button may be a button for performing the specific function. However, in case that the corresponding button is pressed for the predetermined time or more before the onboarding, the pressing may be treated as an input command for performing the onboarding.

Therefore, in case that the predetermined button is pressed for a certain period of time, the processor 130 may identify the command for performing the onboarding, and control the communication device 110 to be operated in the AP mode. Meanwhile, hereinabove, the description describes that the onboarding command is input in case that the specific button is pressed for the predetermined time. However, the manipulation device 240 may be implemented as a combination of the plurality of keys, or may be a dedicated button for receiving the onboarding command.

FIG. 5 is a block diagram showing a configuration of the user terminal device according to an embodiment of the present disclosure.

Referring to FIG. 5, the user terminal device 200 may include a communication device 210, a memory 220, a display 230, the manipulation device 240, and the processor 250.

The user terminal device 200 in FIG. 5 may be an installer terminal described below, or the user terminal that provides the onboarding information to the electronic apparatus in FIG. 2.

The communication device 210 is a component communicating with various types of external devices by using various types of communication methods. The communication device 210 may include a first communication device 211 and a second communication device 215.

The first communication device 211 may be a device that communicates with the access point and may use the Wi-Fi module. The communication device 211 may establish the wireless connection with the access point. Through this operation, the communication device 211 may check channel information of the access point.

The second communication device 215 may include at least one communication chip performing the communication based on various the wireless communication standards such as Bluetooth module, Zigbee, third generation (3G), third generation partnership project (3GPP), long term evolution (LTE), LTE advanced (LTE-A), fourth generation (4G), and fifth generation (5G).

The communication device 210 may communicate with the electronic apparatus. In case that the wireless connection is established, the communication device 210 may provide the onboarding information to the electronic apparatus. For example, FIGS. 3 and 4 show that the onboarding information is provided using the first communication device 210. However, in implementation, the onboarding information may also be provided using the second communication device 215, i.e., peer-to-peer (P2P) communication such as Bluetooth or Zigbee.

The communication device 210 may further include the wired communication module or the like that performs the communication by using a local area network (LAN) module, an Ethernet module, a pair cable, a coaxial cable, an optical fiber cable, an ultra wide-band (UWB) module, or the like.

The communication device 210 may receive the key information from the server. For this operation, the communication device 210 may provide the address information to the server, and receive the key information corresponding to the address information.

The communication device 210 may receive the user account information from the server. For example, in case that the account information described above is the token information, the communication device 210 may transmit the user ID, the password, or the like to the server, and receive the token information in response thereto.

The memory 220 may store the information on the connected access point or the information on the access point that has the connection history. Here, the information on the access point may include the SSID, the security method, the password information, or the like, as described above.

The memory 220 may store the user account information. In addition, the memory 220 may store the onboarding information including at least one of the AP connection information and the user account information, generated based on the access point information described above.

The onboarding information may not only be generated and temporarily stored at the time point where the onboarding information needs to be shared, but also be prepared in advance, stored in advance, and provided to the electronic apparatus at the time point where the sharing is required.

The memory 220 may store the key information. For example, in case of being used by the installer, the user terminal device 200 may store the key information acquired through the server, or the like. Meanwhile, in implementation, the key information described above may not be acquired from the server, but may be generated and used by the user terminal device.

The display 230 may display the user interface window for selection of the function supported by the user terminal device 200. In detail, the display 230 may display the user interface window for the selection of the various functions provided by the user terminal device 200. The display 230 may be a monitor such as the liquid crystal display (LCD) or the organic light emitting diodes (OLED), and may be implemented as a touch screen which may simultaneously perform some functions of the manipulation device 240 described below.

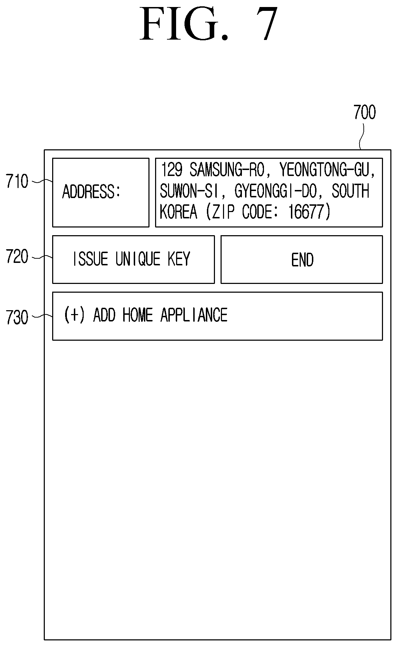

The display 230 may display the address information. In addition, the display 230 may display the electronic apparatuses for which the key information is to be provided. The user interface window that may be displayed on the display 230 is described below with reference to FIGS. 7 to 9 and 11.

The manipulation device 240 may receive, from the user, the selection of a function of the user terminal device 200 and the control command for a corresponding function. The manipulation device 240 may be the keyboard, the mouse, the touch pad, or the like, and may include the microphone for receiving the user voice.

The manipulation device 240 may receive the address information or a command for selecting a device to provide the key information.

The processor 250 may control overall operations of the user terminal device 200. A configuration example of the processor 250 is the same as that of the processor in FIG. 2, and hereinafter, the description only describes a detailed operation of the processor 250.

Meanwhile, according to the present disclosure, the user terminal device 200 may be operated from a standpoint of the installer or from the standpoint of an owner of the electronic apparatus. Meanwhile, the operation above is shown and described as being performed by the installer. However, in implementation, the operation may be performed by the user. First, the description describes the operation of the former case.

The installer may install the plurality of electronic apparatuses in a space where a specific user lives, and acquire the key information through the user terminal device 200. Here, the installer may input the address information where the electronic apparatus is installed. In this case, the processor 250 may control the communication device 210 to transmit the received address information to the server, and acquire the key information in response to transmitting the address information described above.

Meanwhile, hereinabove, the description describes an example of acquiring the key information through the server. This example is provided to generate different key information for each address. However, in implementation, the processor 250 may generate and use the random value without performing the communication with the server.

In this way, in case that the installer acquires the key information and sets an initial setting (i.e., command for performing the onboarding procedure) in each of the installed electronic apparatuses, each of the electronic apparatuses may broadcast the information that the onboarding is necessary.

The processor 250 may control the first communication device 211 to be operated in the AP mode. In addition, here, the processor 250 may enable the first communication device 211 to have the predetermined SSID. For example, the electronic apparatus may identify in advance that a specific network ID is the installer terminal at a time of product launch. Therefore, for each of the electronic apparatuses to identify that the first communication device 211 is the installer's user terminal, the processor 250 may control the first communication device 211 to be operated as the AP having the above-mentioned SSID.

In case that the respective electronic apparatuses are connected to each other through this process, the processor 250 may collect the information on each electronic apparatus, and control the display 230 to display a list of the electronic apparatuses based on the collected information.

In addition, the processor 250 may provide the key information to each of the electronic apparatuses. Here, the processor 250 may control the first communication device 211 to transmit the sequence information and the period information together with the key information. In addition, the processor 250 may control the first communication device 211 to transmit the connection information or the like.

In addition, the processor 250 may provide the information to the communication device to provide the server with information on the searched electronic apparatus or the electronic apparatus to which the key information is provided. Accordingly, the server may identify in advance a new apparatus to be added, and during the subsequent onboarding process by the user, the server may inform the user of the information on the device for which the onboarding has yet to be performed due to power off, or the like.

The electronic apparatus that receives the key information in this way may be in a state for receiving the onboarding information, as described above with reference to FIGS. 2 to 4.

The user of the electronic apparatus 100 may then drive an application for registering the electronic apparatus 100 on the server.

Accordingly, the processor 250 may control the display 230 to display the currently connectable electronic apparatus among the plurality of electronic apparatuses. In case that the user selects one of the displayed electronic apparatus, the processor 250 may control the communication device 210 to provide the onboarding information to the electronic apparatus selected by the user.

Meanwhile, before the operation described above, the processor 250 may access to the home server based on the user ID and the password through the communication with the server, receive the token information that is different from the corresponding account information, and store the same in the memory. In addition, the token information may be included in the onboarding information and provided to the electronic apparatus 100.

The electronic apparatus that receives the onboarding information may share the onboarding information through the communication with another electronic apparatus as described above, and perform the onboarding procedure by using the received onboarding information.

As described above, the user terminal device according to the present disclosure may perform an operation of providing only the onboarding information for one electronic apparatus. However, the electronic apparatuses described above may share the onboarding information with each other, and thus perform the onboarding procedure for the plurality of electronic apparatuses. In addition, during the above-described process, the onboarding information described above may be shared only between the electronic apparatuses that have the same key information. Accordingly, there is no room for another electronic apparatus owned by the user to be added in the above-mentioned process.

FIG. 6 is a diagram for explaining an operation of sharing the key information according to an embodiment of the present disclosure.

Referring to FIG. 6, the installer's user terminal device 30 may acquire the key information from the server (S610). In detail, the user terminal device 30 may receive the address information, provide the received address information to the server, and receive the key information corresponding to the address information.

Here, "the key information" is a unique key value for the specific address, and may be a random value or a random value generated using the address information as a seed value. The key information may be newly generated each time, or a fixed value may be stored for the specific address and used repeatedly.

In case of acquiring the key information in this way, the installer may press the predetermined button on each of the installed electronic apparatuses 100-1, 100-2, 100-3, and 100-4 for the electronic apparatus to enter a state where the electronic apparatus may receive the onboarding information.

In this way, in case that the wireless communication of each electronic apparatus is activated by the button setting, the user terminal device 30 may be operated in the AP mode. Here, the network ID in the AP mode may have the network SSID that allows each electronic apparatus to identify the installer's user terminal device.

In this way, in case that the plurality of electronic apparatuses 100-1 and 100-2 are connected to the user terminal device 30, the user terminal device 30 may provide the key information to each electronic apparatus (S620). Here, the user terminal device 30 may also transmit, to each electronic apparatus, the sequence information and the period information together with the key information. In addition, the user terminal device may also transmit the connection information to each electronic apparatus.

Here, the user terminal device 30 may also transmit the sequence information corresponding to the sequence in which the electronic apparatuses are connected to the user terminal device 30, or also transmit the sequence information determined in another way.

Here, the "connection information" may be information (e.g., password) on a method for the electronic apparatuses to identify each other and a method to perform their connection in case that the wireless connection therebetween is established. The connection information may be determined in advance by a manufacturer and provided by being included in the electronic apparatus, or a method provided by the user terminal device in the above-described process may be used, such as the method described above.

In addition, without providing separate connection information, each electronic apparatus may generate and use the SSID and the password based on the received key information.

In this way, the electronic apparatuses 100 that receive the key information and the sequence information may be alternately operated in the AP mode and the station mode based on the received sequence information.

For example, if the first electronic apparatus 100-1 is in the first sequence, the first electronic apparatus 100-1 may first be operated in the AP mode, and the remaining electronic apparatuses may be operated in the station mode.

Here, the second to fourth electronic apparatuses may be connected to the first electronic apparatus 100-1 (S930).

Accordingly, the first electronic apparatus 100-1 may identify all the electronic apparatuses. Here, the first electronic apparatus 100-1 may check the key information of each electronic apparatus to identify which devices are to share the onboarding information.

FIGS. 7 to 9 are views showing examples of the user interface window which may be displayed on the user terminal device. In detail, FIGS. 7 to 9 are various examples of the user interface window available to the installer.

Referring to FIG. 7, a user interface window 700 may include an address area 710, a key generation area 720, and a device addition area 730.

The address area 710 may be an address of a location where the electronic apparatus is currently installed. For example, if the installation location is an apartment, the address area 710 may include information on the apartment building and unit numbers to distinguish the corresponding house from other houses. The address area 710 may be entered directly by the user, or may be automatically filled in using information included in a delivery list.

The key generation area 720 is an area that receives a command for generating the key. In case that the key generation area 720 is selected, the user terminal device may provide the address information of the address area 710 to the server, receive the key information from the server, and store the same.

Meanwhile, in implementation, the key generation area 720 may be used as an area for receiving a key transmission command. For example, in case that the application is driven, the key information may be automatically generated and provided to the user terminal device, and in case that the user selects the key generation area 720, an operation may be performed to provide the key information to the electronic apparatus.

The device addition area 730 may be an area that receives a command for searching for a new electronic apparatus that has yet to be searched for. In case that the device addition area 730 is selected, the user terminal device may be operated in the AP mode, and in the AP mode, the SSID may have information that allows the electronic apparatus to identify the corresponding AP as the installer's user terminal device.

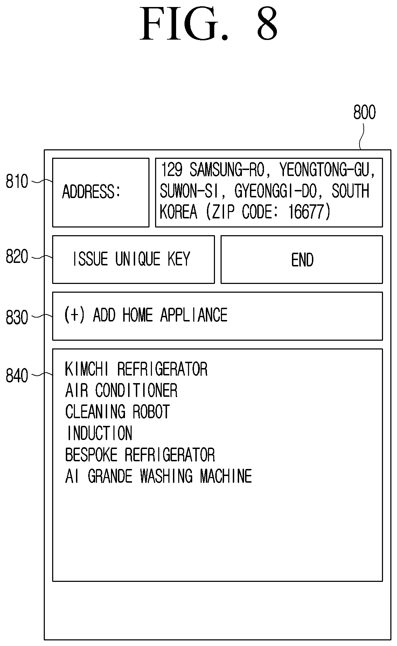

In this state, the installer may press the predetermined button, or the like on the new electronic apparatus to bring each electronic apparatus into a state for performing the onboarding procedure. Accordingly, each electronic apparatus may become an electronic apparatus available for performing the onboarding procedure, and if its access to the user terminal device is established, the user terminal device as shown in FIG. 8 may be displayed.

Referring to FIG. 8, a user interface window 800 may include an address area 810, a key generation area 820, a device addition area 830, and a device list area 840.

The address area 810, the key generation area 820, and the device addition area 830 are the same as those shown in FIG. 7, and the description thus omits their redundant descriptions.

The device list area 840 may be an area that lists and displays the searched electronic apparatus. In case that its the wireless connection is established with the newly installed electronic apparatus, the user terminal device may identify a type of each electronic apparatus through the wireless connection, and display the identified type in the device list area 840.

For this operation, each electronic apparatus may transmit its model name, and display the apparatus type based on the model name received from the user terminal device. Alternatively, each electronic apparatus may transmit information on the apparatus type, and the user terminal device may display the received apparatus type as it is. In implementation, rather than the apparatus type, the model name, model number, or the like may be displayed, and not only single information but other additional information may also be displayed.

Here, the apparatuses may be displayed in the order where the apparatuses are connected to the user terminal device. For example, in the illustrated example, a kimchi refrigerator may first be connected, and the air conditioner may then be connected.

According to this order, the user terminal device may determine the sequence of the respective electronic apparatuses, and transmit the sequence information, the period information, or the like together with the key information described below. For example, in the illustrated example, the user terminal device may search for six devices. Therefore, the user terminal device may provide the kimchi refrigerator with sequence number 1 and the period information of 60 minutes, and provide the air conditioner with sequence number 2 and the period information of 60 minutes.

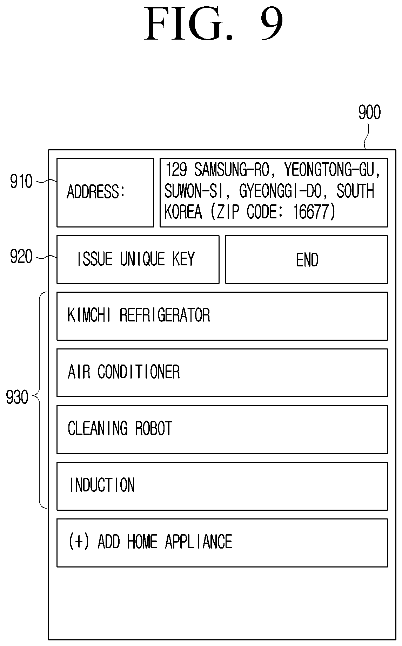

In this environment, in case that the user selects the key generation area 820, the user terminal device may transmit the key information to each electronic apparatus. FIG. 9 shows the user interface window which may be displayed accordingly.

Referring to FIG. 9, a user interface window 900 may include an address area 910, a key generation area 920, a device addition area 930, and a device list area 940.

The address area 910 and the key generation area 920 are the same as those shown in FIG. 7, and the description thus omits their redundant descriptions.

The device list area 940 may be an area that lists and displays the electronic apparatus that receives the key information. In case that this process is performed, each electronic apparatus may be in a state for receiving the onboarding information, as shown in FIG. 8.

Here, the user terminal device 200 may provide the information on the electronic apparatus described above to the server.

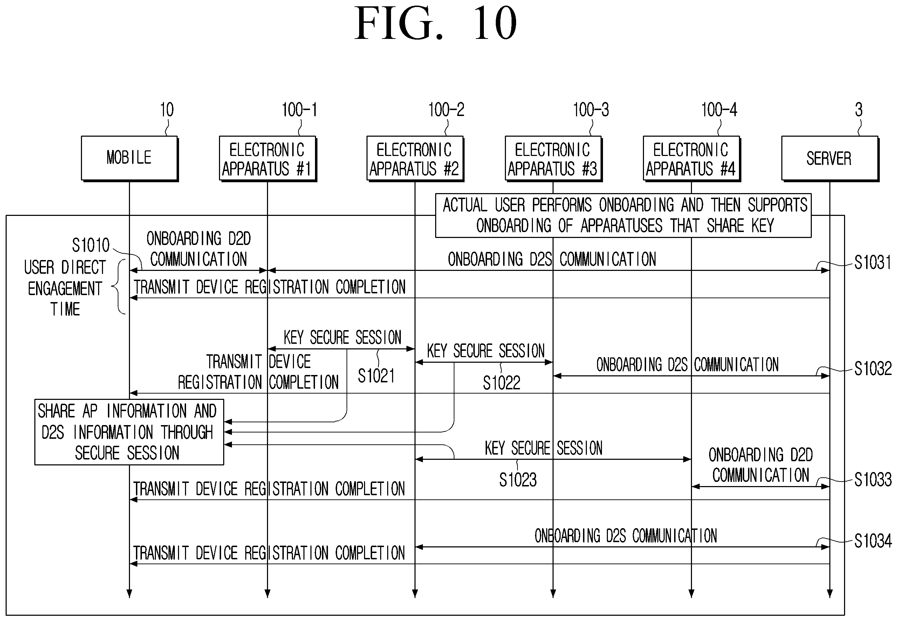

FIG. 10 is a diagram for explaining an operation of providing the onboarding information according to an embodiment of the present disclosure.

Hereinafter, the description is provided assuming a case where among the four electronic apparatuses, the second electronic apparatus 100-2 is operated in the AP mode, the remaining electronic apparatuses 100-1, 100-2, and 100-4 are operated in the station mode, and the user terminal device first provides the onboarding information to the first electronic apparatus 100-1.

First, the user may establish the wireless connection with the electronic apparatus (i.e., first electronic apparatus 100-1) among the plurality of electronic apparatuses, and provide the onboarding information to the first electronic apparatus 100-1 through the established wireless connection (S1010).

The first electronic apparatus 100-1, which receives the onboarding information, may end the connection with the user terminal device, and establish its connection with the second electronic apparatus 100-2 currently operated in the AP mode (S1021).

In addition, the first electronic apparatus 100-1 may provide the onboarding information to the second electronic apparatus 100-2.

After transmitting the onboarding information, the first electronic apparatus 100-1, which is not operated in the AP mode, may immediately perform the operation of establishing its connection with the access point and the registration procedure on the server using the AP connection information included in the onboarding information (S1031).

Meanwhile, in order to share the acquired onboarding information, the second electronic apparatus 100-2 operated in the AP mode may provide the acquired onboarding information by using its established wireless connection between the third electronic apparatus 100-3 and the fourth electronic apparatus 100-4. Meanwhile, the second electronic apparatus 100-2 is currently being operated in the AP mode, and the wireless connection establishment of the third and fourth electronic apparatuses may thus be established in advance before acquiring the onboarding information through the first electronic apparatus 100-1.

In case of receiving the onboarding information in this way, the third electronic apparatus 100-3 and the fourth electronic apparatus 100-4 may perform the onboarding procedure based on the received onboarding information (S1032, and S1033).

Meanwhile, the second electronic apparatus 100-2, which is currently being operated in the AP mode, may perform the onboarding procedure only after providing the onboarding information to all the electronic apparatuses or in case of being switched from the AP mode to the station mode rather than immediately performing the onboarding procedure right after acquiring the onboarding information (S1034).

In case that the registration procedure is completed according to the onboarding procedure of each electronic apparatus, the server 3 may perform an operation of providing their registration to the user terminal device 10.

As described above, in the present disclosure, the user may complete the onboarding procedure for the plurality of electronic apparatuses simply by the operation of providing the onboarding information to one electronic apparatus and sharing the onboarding information for the plurality of electronic apparatuses.

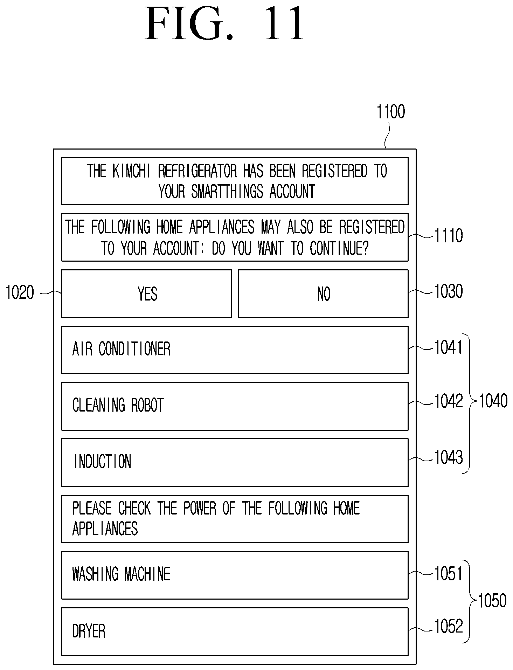

FIG. 11 is a diagram showing an example of the user interface window which may be displayed on the user terminal device.

Referring to FIG. 11, a user interface window 1100 may include an information area 1110, a check area 1120, a cancellation area 1130, a first apparatus information area 1140, and a second apparatus information area 1150.

The information area 1110 may be an area that displays a message indicating that the onboarding procedure is currently available.

The check area 1120 may be an area that receives the onboarding command for the electronic apparatus shown in the first apparatus information area 1140. Here, if the user selects the check area 1120, the user terminal device may provide the onboarding information to any one device displayed in the first apparatus information area 1140.

The cancellation area 1030 may be an area for receiving a command for ending the onboarding procedure described above.

The first apparatus information area 1040 may be an area that displays apparatuses that are currently supplied with power and may perform the onboarding procedure. Such apparatus identification may enable the connection to one electronic apparatus, which is currently being operated in the AP mode, to thus acquire the information, or the user terminal device to be operated in the AP mode to thus use the information on the apparatus that requests the connection.

The second apparatus information area 1050 may be an area that displays a list of the electronic apparatuses that have a problem such as power. In detail, as described above, in the process of initially providing the key information to each of the electronic apparatuses, the server may check the electronic apparatuses that receive the key information. Therefore, in case that the user terminal device connects to the server for the onboarding, the server may provide the user terminal device with the information on the apparatuses to perform the onboarding.

In this case, the user terminal device may list the electronic apparatuses that are currently unable to be connected among the received apparatus information in the second apparatus information area 1050.

Through this display, the user may easily recognize the apparatuses that are not powered, and ensure that the electronic apparatus for which the onboarding has yet to be performed is not missed in the onboarding procedure.

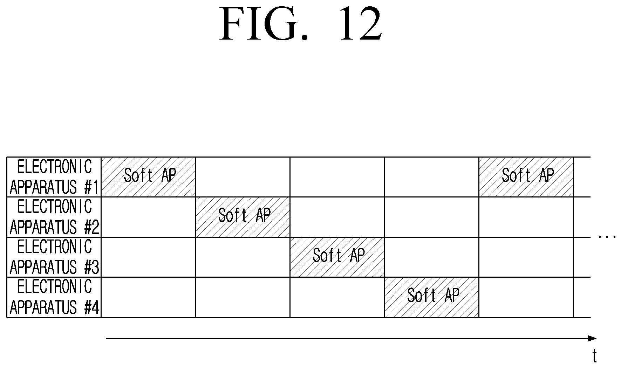

FIG. 12 is a diagram for explaining the communication mode of each electronic apparatus according to an embodiment of the present disclosure.

Referring to FIG. 12, time points at which each of the plurality of electronic apparatuses is operated in the AP mode over time are indicated by hatching. In a table shown in the drawing, a state where the AP mode is not indicated is a case where the apparatus is operated in the station mode.

That is, at a first time point, the first electronic apparatus 100-1 may be operated in the AP mode, and the remaining electronic apparatuses may be operated in the station mode. In addition, after a certain period of time, the second electronic apparatus 100-2 may be operated in the AP mode, and the remaining electronic apparatuses may be operated in the station mode.

In the present disclosure, the electronic apparatuses may be allowed to be sequentially operated in the AP mode one by one in the manner described above for the plurality of electronic apparatuses to sequentially function as a hub.

In detail, assume a case where one device is permanently operated in the AP mode. In this case, there is no problem with sharing the onboarding information, in that sharing the onboarding information may be substantially performed as shown in FIG. 13 described below. However, if a problem occurs in the apparatus that is determined to be operated in the AP mode, sharing the onboarding information may become difficult. In this respect, the present disclosure adopts a method in which each electronic apparatus performs a hub operation of independently performing the sharing operation according to its sequence.

Meanwhile, the period information, which is provided together at the time point where the key information is provided, may be used for a time period in which each electronic apparatus is operated in the AP mode as shown in 12. The period information may be used in two ways. In detail, a first period may be time information until the AP mode is sequentially performed from the apparatus in the first sequence to the apparatus in the last sequence, and the second period may be information on the period in which each electronic apparatus maintains the AP mode.

For example, in case of using the first period, the user terminal device may provide the respective electronic apparatuses with their sequence and an entire period (e.g., time information of 60 minutes and start time information). In this case, the first electronic apparatus 100 in the first sequence may identify its own time as 60/4=15 minutes by dividing the period information by the number of all the apparatuses. That is, the first electronic apparatus 100-1 may be operated in the AP mode from 9:00 to 9:15.

In the above-described manner, the remaining apparatuses may also identify to be required to be operated in the station mode from 9:00 to 9:15.

In case that the next time period arrives, based on the period information and the sequence, the second electronic apparatus 100-2 corresponding to the next sequence may identify to be required to be operated in the AP mode. Therefore, at 9:15, the second electronic apparatus 100-2 may switch its communication mode from the station mode to the AP mode. In response thereto, the first electronic apparatus 100-1 may switch its communication mode from the AP mode to the station mode.

Each electronic apparatus may repeatedly perform this switch of the communication mode based on the period described above.

Any one of the plurality of electronic apparatuses acquires the onboarding information in this switch process of the communication mode, the onboarding information may be shared using the method shown in FIG. 13 described below.

Meanwhile, the example in the drawing shows that only one apparatus out of four apparatuses is operated in the AP mode. However, in implementation, the plurality of apparatuses may also be operated together in the AP mode. For example, if the sequence information is an odd number, the communication mode may be switched alternately into two groups as in a case of an even number. Alternatively, the electronic apparatuses corresponding to a predetermined integer multiple may be operated in the AP mode. For example, it is also possible that the electronic apparatus corresponding to the sequences of 1, 6, 11, and 16 are simultaneously operated in the AP mode, and the remaining electronic apparatuses are operated in the station mode if twenty electronic apparatuses share the onboarding information and the above-mentioned integer is 5.

In addition, the example in the drawing shows an exchange example of the onboarding information among a relatively small number of electronic apparatuses. However, in implementation, large-scale exchange of the onboarding information is also possible.

In this case, the installer may divide the plurality of electronic apparatuses into a plurality of groups, and the communication mode described above may be switched on a group basis.

FIG. 13 is a diagram showing an example of a method of sharing onboarding information among the plurality of electronic apparatuses according to an embodiment of the present disclosure. In detail, FIG. 13 is a diagram showing an example of a sharing method in case that one of the plurality of electronic apparatuses functions as the hub providing the onboarding information.

Referring to FIG. 13, the current first electronic apparatus 100-1 may function as the hub among the plurality of electronic apparatuses. In detail, as shown in FIG. 12, the electronic apparatuses may sequentially change the hub function.

In this way, in case that the first electronic apparatus 100-1 acquires the onboarding information through the user terminal device 10 while functioning as the hub, that is, while being operated in the AP mode (S1310), the first electronic apparatus 100-1 may transmit the acquired onboarding information to other electronic apparatuses 100-2, 100-3, and 100-4 (S1320, S1330, S1340).

Through this process, all the electronic apparatuses 100-1, 100-2, 100-3, and 100-4 may acquire the onboarding information. In addition, each of the electronic apparatuses 100-1, 100-2, 100-3, and 100-4 may perform the onboarding procedure by using the acquired onboarding information.

Meanwhile, the example shown in the drawing assumes that the first electronic apparatus 100-1 first acquires the onboarding information. However, in implementation, any of the second to fourth electronic apparatuses 100-2, 100-3, and 100-4 may first acquire the onboarding information.

For example, assume that the user terminal device 10 first connects to the second electronic apparatus 100-2 and provides the onboarding information to the second electronic apparatus 100-2. In this case, the second electronic apparatus 100-2, which is operated in the station mode, may perform only the operation of providing the onboarding information to the first electronic apparatus 100-1, which is operated the in the AP mode.

The first electronic apparatus 100-1 may then provide the acquired onboarding information to the third electronic apparatus 100-3 and the fourth electronic apparatus 100-4.

Meanwhile, in the example in the drawing shows that the first electronic apparatus 100-1 functions as the hub providing the onboarding information. However, in implementation, as shown in FIG. 12, the electronic apparatuses may each function as the hub sequentially.

The reason why the electronic apparatuses each functions as the hub sequentially is based on an assumption that an error occurs in any one of the plurality of electronic apparatuses described above or no power is supplied thereto. That is, the onboarding information may not be shared if one electronic apparatus permanently functions as the hub, and a problem occurs in the electronic apparatus. Therefore, in the present disclosure, as shown in FIG. 12, the plurality of electronic apparatuses may be implemented to function as the hub that sequentially provides the onboarding information.

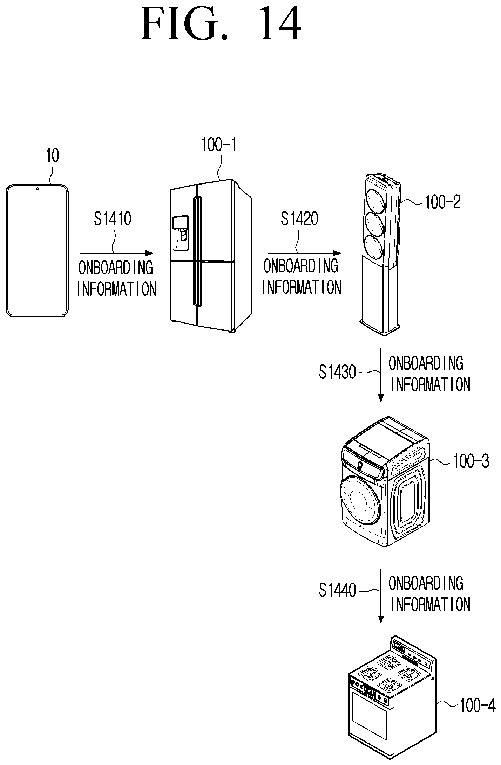

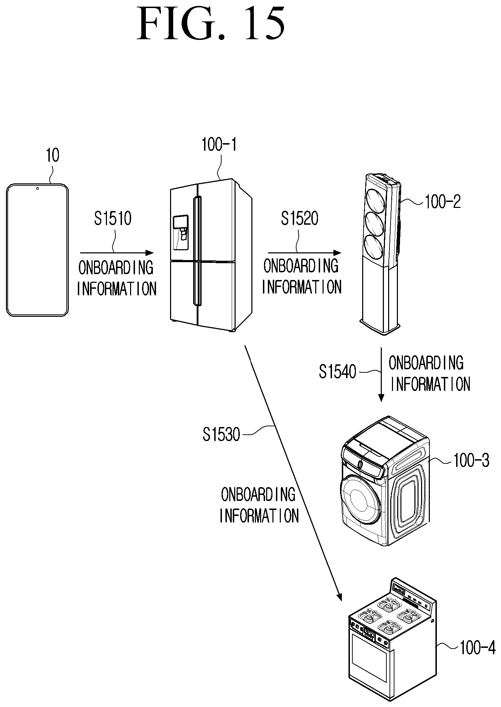

Meanwhile, in implementation, as a default condition, one of the electronic apparatuses may function as the hub, and if a problem occurs in the corresponding electronic apparatus functioning as the hub, the onboarding information may be provided to the remaining electronic apparatuses using the 1:1 transmission method rather than the hub method. Alternatively, the onboarding information may be provided in the 1:1 manner from the beginning. This example is described below with reference to FIGS. 14 and 15.

FIG. 14 is a diagram showing an example of the method of sharing onboarding information among the plurality of electronic apparatuses according to an embodiment of the present disclosure. In detail, FIG. 14 is a diagram showing an example of a method in which the plurality of electronic apparatuses share the onboarding information in the 1:1 manner.

Referring to FIG. 14, the first electronic apparatus 100-1 among the plurality of electronic apparatuses may acquire the onboarding information from the user terminal device (S1410).

The first electronic apparatus 100-1, which acquires the onboarding information, may establish its connection with the second electronic apparatus 100-2 corresponding to the next sequence, and provide the onboarding information to the second electronic apparatus 100-2 (S1420).

The first electronic apparatus 100-1, which completes the operation of providing the onboarding information, may perform the onboarding procedure.

Next, the second electronic apparatus 100-2 may establish its connection with the third electronic apparatus 100-3 corresponding to the next sequence, and provide the onboarding information to the third electronic apparatus 100-3 (S1430). Next, the second electronic apparatus 100-2 may perform the onboarding procedure, and the third electronic apparatus 100-3 may provide the onboarding information to the fourth electronic apparatus 100-4 (S1440).

The third electronic apparatus 100-3 and the fourth electronic apparatus 100-4 may then complete the onboarding procedure.

Meanwhile, the description hereinabove assumes that the onboarding information is first provided to the first electronic apparatus 100-1 corresponding to the first sequence from the user terminal device. However, in implementation, the electronic apparatus (e.g., third electronic apparatus 100-3) in a sequence other than the first sequence may first acquire the onboarding information.

In this case, the onboarding information may be transmitted from the third electronic apparatus 100-3 to the fourth electronic apparatus 100-4, then transmitted from the fourth electronic apparatus 100-4 to the first electronic apparatus 100-1, and lastly transmitted from the first electronic apparatus 100-2 to the second electronic apparatus 100-2.

In addition, in implementation, each electronic apparatus may identify the sequence information of all the electronic apparatuses, and thus perform the sharing operation described above through the connection with the electronic apparatus in a sequence following the next sequence rather than simply immediately establishing the connection with the electronic apparatus in the next sequence.

For example, assume that in the situation shown in FIG. 14, power is not supplied to the second electronic apparatus 100-2 or an error occurs in the communication. In this case, although the first electronic apparatus 100-1 may first attempt the wireless connection with the second electronic apparatus 100-2, its wireless connection with the second electronic apparatus 100-2 may not be established for reasons described above.

Here, if the first electronic apparatus 100-1 is unable to establish its connection with the second electronic apparatus 100-2 within a predetermined number of times or within the predetermined time, the first electronic apparatus 100-1 may transmit the onboarding information to the third electronic apparatus 100-3 by establishing its connection with the third electronic apparatus 100-3, which is ranked third.

Meanwhile, hereinabove, each electronic apparatus is shown and described as performing only one transmission operation. However, in implementation, each electronic apparatus may perform the communication in the 1:1 manner, and perform the transmission multiple times. This example is described below with reference to FIG. 15.

FIG. 15 is a diagram showing an example of the method of sharing onboarding information among the plurality of electronic apparatus according to an embodiment of the present disclosure. In detail, FIG. 15 is a diagram showing an example of the method in which the plurality of electronic apparatuses share the onboarding information in the 1:1 manner.

Referring to FIG. 15, the first electronic apparatus 100-1 among the plurality of electronic apparatuses may acquire the onboarding information from the user terminal device (S1510).

The first electronic apparatus 100-1, which acquires the onboarding information, may establish its connection with the second electronic apparatus 100-2 corresponding to the next sequence, and provide the onboarding information to the second electronic apparatus 100-2 (S1520).

Next, the first electronic apparatus 100-1 may establish its connection with the fourth electronic apparatus 100-4 corresponding to the last sequence, and provide the onboarding information to the fourth electronic apparatus 100-4.

Here, the second electronic apparatus 100-2, which also has the onboarding information, may establish its connection with the third electronic apparatus 100-3 in the following sequence, and provide the onboarding information to the third electronic apparatus 100-3.

In this way, the electronic apparatus having the onboarding information may perform the operation of sharing the onboarding information multiple times rather than once, thus completing the sharing of the onboarding information more quickly than in the case of FIG. 14.

Meanwhile, hereinabove the description describes a case where the first apparatus transmits the onboarding information to the apparatus in the second sequence, and then transmits the information to the apparatus in the last sequence. However, in implementation, the onboarding information may be transmitted in various ways other than the above-mentioned sequence. The sequence may be implemented in such a way that each electronic apparatus independently determines and uses the electronic apparatus of another sequence to share the onboarding information based on the sequence information identified by each electronic apparatus and the number of all the apparatuses to share the information.

In addition, at the time point where the installer described above provides the key information, the sharing method, a shared transmission method, or the like may be transmitted to and used in each electronic apparatus in addition to sharing the sequence information.

In addition, the user terminal device that first transmits the onboarding information may determine the sharing method and the shared transmit method, and also share these methods in a process of first transmitting the onboarding information to the electronic apparatus.

In detail, as described above, the installer may recognize the information on the apparatus that requires the onboarding in a process of first providing the key information, and transmit the information to the server.

Therefore, in case of accessing to the server to transmit the onboarding information, the user terminal device may acquire the information on the electronic apparatus that is to receive the onboarding information, determine an efficient transmission method, and provide the shared transmission method together in the process of first providing the onboarding information to the electronic apparatus.

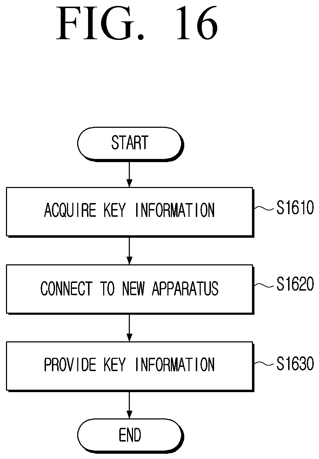

FIG. 16 is a flowchart for explaining a method of sharing the key information according to an embodiment of the present disclosure.

Referring to FIG. 16, first, the user terminal device may acquire the key information from the server (S1610). The installer may drive the application, input the address information, or provide the address information included in the delivery information to the server. In this case, the server may generate the unique key value based on the address and provide the same to the installer.

Meanwhile, in implementation, as described above, the user terminal device may generate and use the random value without using the server.

Next, the user terminal device may connect to the new apparatus (S1620). In detail, the user terminal device may be operated in the AP mode for its connection with each electronic apparatus, and establish the wireless connection with the new electronic apparatuses by the connection request from the new electronic apparatuses while being operated in the AP mode.

For this operation, the installer's user terminal device may generate the AP having the predetermined SSID, or use the password required to the access to the SSID as a predetermined value. That is, each electronic apparatus may store the predetermined access information (SSID and password) at the time of product shipment, and establish the wireless connection with the user terminal device based on the access information.

In case that its wireless connection with the new electronic apparatus is established through this process, the user terminal device may provide the key information to each new electronic apparatus (S1630). Here, the user terminal device may also provide the period information and the sequence information together with the key information described above. In addition, if necessary, the user terminal device may also provide information on the shared SSID and the shared password separately from the key information.

For example, a rule for search and access based on certain information may be necessary for mutual access between the plurality of electronic apparatuses. To this end, the following four methods may be used.

The first method may be a method in which the manufacturer prepares and provides a connection rule for each electronic apparatus. In this case, each electronic apparatus may generate the SSID and the password according to the same connection rule, and thus easily identify another electronic apparatus that is to perform the operation of sharing the onboarding information. However, if the neighbor's electronic apparatus is also a product of the same manufacturer, the SSID and the password may be generated and used according to the above-mentioned rule. In this case, the electronic apparatus may check whether the same key information is included in another electronic apparatus after its wireless connection to thus check whether another electronic apparatus is the apparatus that is to perform the sharing operation described above together.

The second method may be a method in which the user terminal device provides the above-described connection information to each electronic apparatus in a process of providing ring information. In this case, unlike the first method there is little room for another user's electronic apparatus to be used in that the above-mentioned connection information is information of the apparatus, currently shared from the user terminal device.

A third method is a combination of the first and second methods, and may be a method in which the manufacturer stores a plurality of connection methods in advance in each electronic apparatus, and the user terminal device provides each electronic apparatus with only a connection method that is to be currently used.

The fourth method may be a method in which each electronic apparatus generates and uses at least one of the SSID or the password based on the key information. In this case, if each electronic apparatus generates the SSID and the password in a common way, each electronic apparatus may easily identify another electronic apparatus that is to perform the operation of sharing the onboarding information together.

The description hereinabove describes the various methods for mutual identification between the respective electronic apparatuses. However, in implementation, it is possible to use a combination of the methods described above, and it is also possible to use a method other than the methods described above.

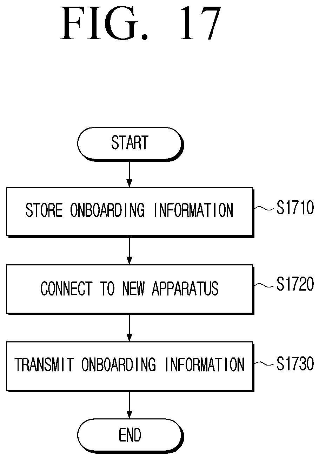

FIG. 17 is a flowchart for explaining a method of providing the onboarding information according to an embodiment of the present disclosure. In detail, FIG. 17 is the flowchart for explaining the method of providing the onboarding information by using the user terminal device by the user who owns the plurality of electronic apparatuses.

Referring to FIG. 17, the user terminal device may store the onboarding information to be used in the onboarding procedure of the electronic apparatus (S1710). Here, the onboarding information is information for connecting to the access point, may include the service set identifier (SSID) of the access point, the security setting information of the access point, and the password information corresponding to the security setting, and the user terminal device may further store the user account information for the registration procedure on the server.

The user terminal device may establish the wireless connection with one of a plurality of new electronic apparatuses (S1720). Here, one of the plurality of electronic apparatuses may be the electronic apparatus currently operated in the AP mode, or the electronic apparatus on which the user performs a predetermined manipulation. Here, the predetermined manipulation may indicate the operation of pressing a button on a specific electronic apparatus for the predetermined time.

In addition, in implementation, the user terminal device 200 may receive information on the new electronic apparatus from the server, and establish its wireless connection with one of the plurality of electronic apparatuses based on the received information on the new electronic apparatus. For example, in the process of providing the key information, the installer may provide the information on the new electronic apparatus to the server. In this case, the user terminal device may acquire the information on the new electronic apparatus from the server, and establish its wireless connection with one electronic apparatus that matches the acquired information on the new electronic apparatus.

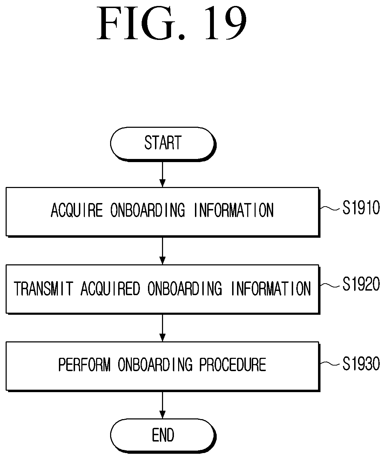

In case that its wireless connection with one electronic apparatus is established in this way, the user terminal device may provide the onboarding information to the corresponding electronic apparatus (S1730). The electronic apparatus that receives the onboarding information may share the onboarding information with another electronic apparatus through the operation shown in FIG. 19 described below.

As described above, the transmission of the onboarding information according to the present disclosure may be performed for one electronic apparatus. However, the onboarding information may be shared through the information sharing between the respective electronic apparatuses, thus improving user convenience.

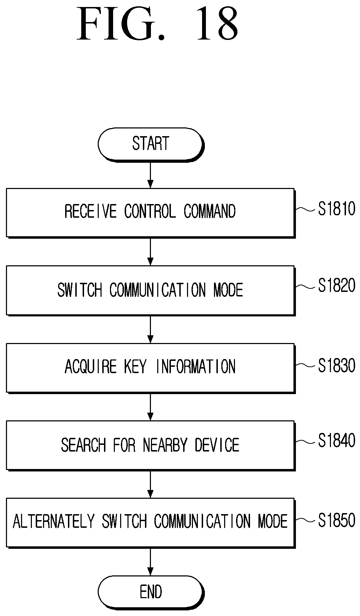

FIG. 18 is a flowchart for explaining a method of identifying another electronic apparatus according to an embodiment of the present disclosure.

Referring to FIG. 18, the electronic apparatus may receive the command for performing the onboarding procedure (S1810). This performance command may be input to the electronic apparatus through software, or may be input through the button located on one side of the electronic apparatus.

In case of receiving the performance command, the electronic apparatus may switch its communication mode to acquire the key information (S1820). In detail, to search for the AP having the predetermined SSID, the electronic apparatus may switch its communication mode to the station mode, and search for the AP having the predetermined SSID to thus establish its wireless connection with the AP. Here, the SSID and the access information (for example, password) for accessing the SSID may be provided by the manufacturer to the electronic apparatus in advance as the predetermined value.

In case that its connection with the AP having the predetermined SSID is established in this way, the electronic apparatus may acquire the key information from the AP (S1830). Here, the electronic apparatus may receive the sequence information and the period information together with the key information. In addition, the electronic apparatus may also receive the information on the shared SSID and the shared password.

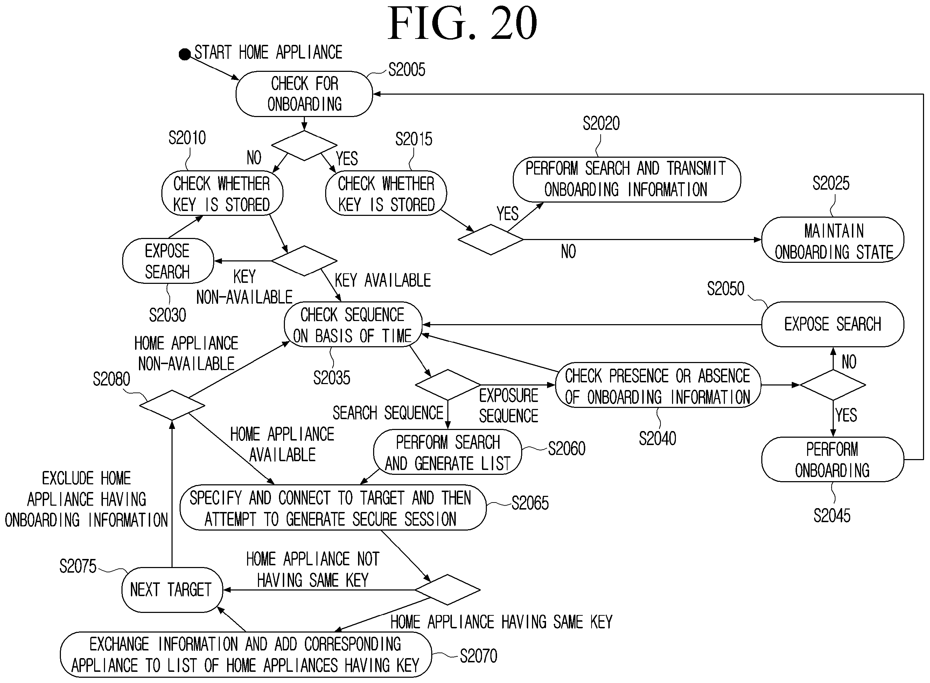

In case of acquiring the key information, the electronic apparatus may be operated alternately in the AP mode and the station mode based on the acquired period and sequence, and identify another electronic apparatus having the same key information during this process (S1840). A more detailed operation thereof is described below with reference to FIG. 20.

After identifying another electronic apparatus having the key information, to share the onboarding information, the electronic apparatus may maintain the process of switching its communication mode alternately to the AP mode and the station mode based on the previously acquired period and sequence (S1850).

The method of sharing the onboarding information after the process of switching the communication mode is described below with reference to FIG. 19.

FIG. 19 is a flowchart for explaining a method for controlling an electronic apparatus according to an embodiment of the present disclosure.

Referring to FIG. 19, the electronic apparatus may acquire the onboarding information (S1910). In detail, the electronic apparatus may acquire the onboarding information from the user terminal device, or may acquire the onboarding information from another electronic apparatus.

For example, in case of being operated in the AP mode, the electronic apparatus may acquire the onboarding information from another electronic apparatus or the user terminal device, operated in the station mode. Alternatively, in case of being operated in the station mode, the electronic apparatus may have the key information, and may acquire the onboarding information from another electronic apparatus operated in the AP mode.

In addition, the electronic apparatus may transmit the acquired onboarding information to another electronic apparatus that has yet to be onboarded among other electronic apparatuses having the key information (S1920). If the electronic apparatus is operated in the AP mode, the connection may be established in case that another electronic apparatus operated in the station mode requests its connection to the current electronic apparatus, and the current electronic apparatus may then transmit the onboarding information to another electronic apparatus operated in the station mode that requests the connection.

Here, a procedure may be performed to check whether the electronic apparatus having the station mode that requests the connection has the same ring information. Alternatively, in some cases, it is possible to omit the procedure for checking whether the electronic apparatus includes the separate ring information by enabling the wireless connection only in case that the electronic apparatus includes the ring information during the wireless connection process, or it is possible to check whether the electronic apparatus includes the ring information in advance.

In case of being operated in the station mode, the electronic apparatus may establish the wireless connection by requesting its connection to another electronic apparatus operated in the AP mode, and transmit the acquired onboarding information to another electronic apparatus operated in the corresponding AP mode.

Meanwhile, whether the current electronic apparatus is operated in the AP mode or the station mode may be determined based on the period information and the sequence information provided as described above with reference to FIG. 12, and in the operation mode based on the received period information and the sequence information, the sharing operation suitable for the current operation mode may be performed.

That is, in case of being operated in the AP mode, the current electronic apparatus may become the device that functions as the hub providing the onboarding information to other electronic apparatuses. On the other hand, in case of being operated in the station mode, the current electronic apparatus may provide the onboarding information only to the electronic apparatus operated in the AP mode, and another electronic apparatus operated in the AP mode and receiving the onboarding information may function as the hub providing the onboarding information.

The electronic apparatus may perform the registration procedure of the electronic apparatus by using the acquired onboarding information (S1930). For example, in case of acquiring the onboarding information, the electronic apparatus may check whether the onboarding information sharing is completed based on the sequence information, and if the onboarding information sharing is completed, the electronic apparatus may switch its communication mode to the station mode, and establish the connection to the access point based on the onboarding information. Even in this case, the time point for performing the registration procedure may be different based on whether the current electronic apparatus is in the AP mode or the station mode.

For example, if acquiring the onboarding information while being operated in the station mode, in detail, if acquiring the onboarding information from another electronic apparatus, the electronic apparatus may immediately perform the onboarding procedure. If acquiring the onboarding information from the user terminal device, the electronic apparatus may immediately perform the onboarding procedure after the operation of sharing the onboarding information with another electronic apparatus operated in the AP mode.

On the other hand, if acquiring the onboarding information while being operated in the AP mode, the electronic apparatus may perform the onboarding procedure only in case of transmitting the onboarding information to all the other electronic apparatuses, or at the time point where its current communication mode is switched from the AP mode to the station mode, rather than immediately performing the onboarding procedure.

As described above, in the method for controlling an electronic apparatus according to the present disclosure, the electronic apparatus may share the received onboarding information with another electronic apparatus. Therefore, the user may perform the onboarding procedure for the plurality of electronic apparatuses simply by providing the onboarding information for one electronic apparatus, without the need to repeatedly perform the onboarding procedure.

In addition, in the above-described sharing process, the plurality of electronic apparatuses may function as the hub of providing the onboarding information based on the sequence. Therefore, even if a problem occurs in any one of the plurality of electronic apparatuses, the apparatuses except for the problematic device may fully share the onboarding information.

FIG. 20 is a flowchart for explaining a method of sharing the onboarding information according to an embodiment of the present disclosure. In detail, FIG. 20 is a flowchart showing the controlling method from a time point where one electronic apparatus is first started until the onboarding procedure is completed.

Referring to FIG. 20, if the electronic apparatus is started, the electronic apparatus may check for its onboarding (S2005). Here, the start of the electronic apparatus may include a state where the electronic apparatus is installed and powered for the first time, or its initialization process is performed.

In this state, the electronic apparatus may check whether its onboarding is currently performed or whether the electronic apparatus acquires the onboarding information for performing the onboarding.

If the onboarding is already performed, that is, if its wireless connection with the access point and the server registration is established, the electronic apparatus may check whether the key information is stored (S2015). For example, as described above, if the current electronic apparatus already performs the onboarding, whereas another electronic apparatus has yet to acquire the onboarding information, the electronic apparatus may be required to perform the operation of transmitting the onboarding information.

Therefore, in case of storing the key information, the electronic apparatus may perform the search operation for establishing its wireless connection with another electronic apparatus and the operation of transmitting the onboarding information after the connection (S2020). Next, if the onboarding information is transmitted to another electronic apparatus in the predetermined time, the electronic apparatus may delete the pre-stored key information. Here, the predetermined time may be the time (e.g., period information (e.g., 60 minutes)) corresponding to the period information provided while transmitting the ring information, may be the period information divided by the number of the predetermined apparatuses (e.g., 60/10= 6 minutes), or may be the integer multiple of the corresponding time (e.g., 6*2=12 minutes).

If storing no key information, the electronic apparatus may maintain the current state without any additional operation (S2025). The electronic apparatus may then perform an operation based on the control command of the external device according to the current onboarding state, or perform an operation of a general IoT device that provides the state of the current electronic apparatus to the server.

If not in the onboarding state, the electronic apparatus may check whether the key information is stored (S2010), and if having no key information, the electronic apparatus may maintain a search exposure to receive the key information (S2030). In this state, the electronic apparatus may acquire the key information by the operation of the user terminal device as shown in FIG. 16. Here, the electronic apparatus may receive at least one of the sequence information, the period information, SSID information, or the password information together with the key information.

If storing the key information, the electronic apparatus may check the received sequence (S2035). The electronic apparatus may perform the search operation of searching for another device based on the checked sequence, or may perform an operation of checking the access to another electronic apparatus. For example, the electronic apparatus may be selectively operated in the AP mode or in the station mode based on the checked sequence. The detailed sequence check operation is described above with reference to FIG. 12, and the description thus omits its redundant description.

First, the description describes the operation of the electronic apparatus in the AP mode. In the AP mode, the electronic apparatus may check whether the onboarding information is stored or whether the onboarding information is received from the user terminal device (or another electronic apparatus) in the corresponding process (S2040).

In case of receiving the onboarding information as a check result, the electronic apparatus may perform the onboarding procedure (S2045). Meanwhile, in implementation, the electronic apparatus may immediately perform the onboarding procedure as shown in the drawing. However, in implementation, the electronic apparatus may also perform the onboarding procedure after transmitting the onboarding information to another electronic apparatus. For example, the electronic apparatus may perform the onboarding procedure at the time point where its operation in the AP mode ends.

If having no onboarding information, the electronic apparatus may search for another electronic apparatus (S2050).

Next, the description describes the operation of the electronic apparatus in the station mode. In case of being operated in the station mode, the electronic apparatus may check the connectable APs (S2060). During this process, the electronic apparatus may establish the communication with the respective APs (S2065), check whether each AP has the same key as a main source, and add a corresponding electronic apparatus to the list of the electronic apparatus that is to perform the onboarding operation together if the corresponding electronic apparatus has the same key (S2070).

The list may include the SSID of the electronic apparatus and information (e.g., flag) on whether the electronic apparatus is onboarded. That is, each electronic apparatus may manage the onboarding information state of another electronic apparatus through the above-mentioned flag, and delete the stored key value if identifying that all the apparatuses is onboarded, thereby ending the operation of sharing the onboarding information or the like described above.

Through this process, if other electronic apparatuses sequentially enter the AP mode (2075), the electronic apparatus may check another electronic apparatus to perform the onboarding operation together. In addition, another electronic apparatus may also perform the same operation as shown in FIG. 20, and thus generate a common list in the above-described process.

Meanwhile, if another electronic apparatus is on the list, the electronic apparatus may perform a procedure that only checks whether the electronic apparatus stores the onboarding information without performing the above-mentioned check procedure. Meanwhile, if the current electronic apparatus stores the onboarding information, that is, if the user connects to the current electronic apparatus and stores the onboarding information, the electronic apparatus may provide the onboarding information to the electronic apparatus, which is operated in the AP mode, in the station mode.

In this case, the electronic apparatus operated in the AP mode may delete the electronic apparatus providing the onboarding information from the above-mentioned list. In addition, the electronic apparatus operated in the AP mode may check the sharing state of the onboarding information in the system through the processes of providing the onboarding information to another electronic apparatus, and deleting the apparatus, which receives the onboarding information, from the above-mentioned list. If determining that the sharing of the onboarding information for all the electronic apparatuses is completed through the processes, the electronic apparatus may also end its operation in the AP mode and perform the onboarding procedure by using the onboarding information.

Meanwhile, hereinabove, the description shows and describes that the electronic apparatus checks another electronic apparatus in the station mode. However, in implementation, the electronic apparatus may check another electronic apparatus even in the AP mode.

That is, while the electronic apparatus is operated in the AP mode, another electronic apparatus may request the connection establishment, and in the state where the wireless connection is established, the electronic apparatuses may mutually check their key information. As a result, both the electronic apparatus operated in the station mode and the electronic apparatus operated in the AP mode may add the counterpart apparatus to the above-mentioned list.

Meanwhile, hereinabove, the electronic apparatus may directly check the ring information and add the corresponding apparatus to the list. However, in implementation, the electronic apparatus may also check the ring information during the connection process described above. In detail, the electronic apparatuses having the ring information may temporarily generate a certain identification number based on the ring information, and check whether the electronic apparatuses include the ring information in the access process by applying this identification number to the SSID or the password.

For example, if the ring information is a12345689b, the electronic apparatuses having this ring information may share a rule of generating an SSID having a123 by reflecting the first four letters of the ring information, and generating an access password for the SSID as 689b by reflecting the last four letters of the ring information. This method of generating the SSID and the password is only an example, and various methods other than that described above may be applied.

Accordingly, the electronic apparatus operated in the AP mode may generate the SSID starting with a123. Therefore, the electronic apparatus operated in the station mode may thus identify the SSID starting with a123 as the electronic apparatus having the same key information, and attempt to connect to the corresponding electronic apparatus. In addition, the electronic apparatus may access to the corresponding electronic apparatus by using the password mentioned above while checking the connection.

Meanwhile, hereinabove, the description shows and describes that the electronic apparatus generates both of the SSID and the password based on the ring information. However, in implementation, the electronic apparatus may generate only one of the two information based on the ring information. In addition, in the provision process of the ring information described above, the electronic apparatus may receive at least one of a separate SSID (or shared SSID) and a password (in detail, shared password), and use the received shared SSID and shared password, rather than generating the SSID and the password based on the ring information.

Each electronic apparatus may individually perform the operations described above, acquire the onboarding information through the above-described operation, and provide the acquired onboarding information to another electronic apparatus. In this method according to the present disclosure, the electronic apparatuses may share the onboarding information therebetween. Therefore, the user may provide the onboarding information for the plurality of electronic apparatuses simply by first providing the onboarding information to only one electronic apparatus.

In addition, in the process of sharing the onboarding information described above, the above-described sharing may be performed only between the electronic apparatuses having the key information, thus preventing the electronic apparatus in another household within the wireless connection range from unnecessarily receiving the onboarding information.

Meanwhile, the methods according to at least some of the various embodiments of the present disclosure described above may be implemented in the form of an application which may be installed on a conventional electronic apparatus.

In addition, the methods according to at least some of the various embodiments of the present disclosure described above may be implemented only by software upgrade or hardware upgrade of the conventional electronic apparatus.

In addition, the methods according to at least some of the various embodiments of the present disclosure described above may be performed through an embedded server disposed in the electronic apparatus, or at least one external server of the electronic apparatus.

Meanwhile, according to an embodiment of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus A) according to the disclosed embodiments. In case that the instruction is executed by the processor, the processor may perform a function corresponding to the instruction directly or by using another component under control of the processor. The instruction may include a code provided or executed by a compiler or an interpreter. The machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored. According to an embodiment, the methods according to the various embodiments disclosed in this document may be included and provided in a computer program product. The computer program product may be traded as a product between a seller and a purchaser. The computer program product may be distributed in a form of the machine-readable storage medium (for example, a compact disc read only memory (CD-ROM)), or may be distributed online (e.g., downloaded or uploaded) through an application store (e.g., PlayStore^{™}) or directly between two user devices (e.g., smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The various embodiments of the present disclosure may be implemented by software including an instruction stored in the machine-readable storage medium (for example, the computer-readable storage medium). A machine may be an apparatus that invokes the stored instruction from the storage medium, may be operated based on the invoked instruction, and may include the electronic apparatus (e.g., electronic apparatus 100) according to the disclosed embodiments.

In case that the instruction is executed by the processor, the processor may perform a function corresponding to the instruction directly or by using another component under control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
a communication device;
at least one memory storing key information; and
at least one processor configured to:
perform a registration procedure of the electronic apparatus by using onboarding information acquired by the electronic apparatus,
check other electronic apparatuses to determine at least one electronic apparatus of the other electronic apparatuses having the key information, and
control the communication device to transmit the onboarding information acquired by the electronic apparatus to an electronic apparatus of the at least one electronic apparatus determined to have the key information and that has yet to be onboarded.

2. The electronic apparatus as claimed in claim 1, wherein
the key information includes a random value, and
the at least one processor is configured to:
generate at least one of a service set identifier (SSID) or a password based on the random value, and
establish connection with another electronic apparatus by using at least one of the generated SSID or password.

3. The electronic apparatus as claimed in claim 1, wherein
the communication device is operable in an access point (AP) mode or a station mode, and
the at least one processor is configured to:
control the communication device to operate in the AP mode and the station mode alternately.

4. The electronic apparatus as claimed in claim 3, wherein the at least one processor is configured to:
acquire the onboarding information from another electronic apparatus having a communication device operating in the station mode or a user terminal device while the communication device of the electronic apparatus is operating in the AP mode, and
transmit the acquired onboarding information to the electronic apparatus of the at least one electronic apparatus determined to have the key information and that has yet to be onboarded, while a communication device of the at least one electronic apparatus determined to have the key information and that has yet to be onboarded is operating in the station mode and the communication device of the electronic apparatus is operating in the AP mode.

5. The electronic apparatus as claimed in claim 3, wherein the at least one processor is configured to:
acquire the onboarding information from another electronic apparatus having the key information and having a communication device operating in the AP mode while the communication device of the electronic apparatus is operating in the station mode, and
transmit the acquired onboarding information to the electronic apparatus of the at least one electronic apparatus determined to have the key information and that has yet to be onboarded, while the communication device of the electronic apparatus is operated in the station mode and a communication device of the electronic apparatus of the at least one electronic apparatus determined to have the key information and that has yet to be onboarded is operating in the AP mode.

6. The electronic apparatus as claimed in claim 3, wherein
the at least one memory stores period information and sequence information, and
the at least one processor is configured to control the communication device to:
operate in the AP mode at a time point corresponding to the period information and the sequence information, and
operate in the station mode at remaining time points.

7. The electronic apparatus as claimed in claim 6, wherein the at least one processor is configured to:
check whether sharing of the onboarding information is completed based on the sequence information, and
control the communication device of the electronic apparatus to operate in the station mode and establish connection to an access point based on the onboarding information when the check of whether sharing of the onboarding information is completed indicates that the sharing of the onboarding information is completed.

8. The electronic apparatus as claimed in claim 1, wherein
the onboarding information includes AP connection information including a service set identifier (SSID) of an access point, security setting information of the access point, and password information corresponding to the security setting information, and
the at least one processor is configured to:
establish connection with the access point based on the AP connection information.

9. The electronic apparatus as claimed in claim 8, wherein
the onboarding information further includes user account information, and
the at least one processor is configured to:
perform the registration procedure of the electronic apparatus on an external server by using the user account information after the electronic apparatus establishes connection with the access point.

10. The electronic apparatus as claimed in claim 1, wherein the key information includes at least one of a key value generated based on an address where the electronic apparatus is installed, shared SSID information, or shared password information.

11. A method for controlling an electronic apparatus, the method comprising, by the electronic apparatus:
storing key information in the electronic apparatus;
acquiring onboarding information;
performing a registration procedure of the electronic apparatus by using the acquired onboarding information;
checking other electronic apparatuses to determine at least one electronic apparatus of the other electronic apparatuses having the key information; and
transmitting the acquired onboarding information to an electronic apparatus of the at least one electronic apparatus determined to have the key information and that has yet to be onboarded.

12. The method as claimed in claim 11, wherein
the key information includes a random value, and
the method further comprising, by the electronic apparatus:
generating at least one of a service set identifier (SSID) or a password based on the random value, and
establishing connection with another electronic apparatus by using at least one of the generated SSID or password.

13. The method as claimed in claim 11, further comprising, by the electronic apparatus:
wherein in the acquiring of the onboarding information, the onboarding information is acquired from another electronic apparatus while a communication mode of the another electronic apparatus is a station mode or a user terminal device and a communication mode of the electronic apparatus is an access point (AP) mode, and
in the transmitting of the acquired onboarding information,
the onboarding information is transmitted to the electronic apparatus determined to have the key information and that has yet to be onboarded, while the communication mode of the electronic apparatus determined to have the key information and that has yet to be onboarded is the station mode and the communication mode of the electronic apparatus is the AP mode.

14. The method as claimed in claim 11, wherein the onboarding information includes AP connection information including a service set identifier (SSID) of an access point, security setting information of the access point, and password information corresponding to the security setting information, and
in the performing of the onboarding procedure, connection with the access point is established based on the AP connection information.

15. A non-transitory computer-readable recording medium which stores a program for executing a method for controlling an electronic apparatus, wherein the method includes, by the electronic apparatus:
storing key information in the electronic apparatus;
acquiring onboarding information;
performing a registration procedure of the electronic apparatus by using the acquired onboarding information;
checking other electronic apparatuses to determine at least one electronic apparatus of the other electronic apparatuses having the key information; and
transmitting the acquired onboarding information to an electronic apparatus of the at least one electronic apparatus determined to have the key information and that has yet to be onboarded.
